(19)

Europäisches Patentamt

European Patent Office

Office européen des brevets

(11) **EP 4 306 296 B1**

(12) **EUROPEAN PATENT SPECIFICATION**

(45) Date of publication and mention
of the grant of the patent:
**03.09.2025 Bulletin 2025/36**

(21) Application number: **23183943.2**

(22) Date of filing: **06.07.2023**

(51) International Patent Classification (IPC):
**B29C 57/04** *(2006.01)* **B29C 31/00** *(2006.01)*

(52) Cooperative Patent Classification (CPC):
**B29C 57/04; B29C 31/002**

(54) **APPARATUS AND METHOD FOR DISTRIBUTING PIPES MADE OF THERMOPLASTIC MATERIAL TO A BELLING MACHINE**

VORRICHTUNG UND VERFAHREN ZUM VERTEILEN VON ROHREN AUS THERMOPLASTISCHEM MATERIAL AN EINE GLOCKENMASCHINE

DISPOSITIF ET PROCÉDÉ POUR LA DISTRIBUTION DE TUYAUX EN MATIÈRE THERMOPLASTIQUE À UNE MACHINE À CLOCHE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.07.2022 IT 202200014644**

(43) Date of publication of application:
**17.01.2024 Bulletin 2024/03**

(73) Proprietor: **SICA S.P.A.**
**48011 Alfonsine (Ravenna) (IT)**

(72) Inventor: **TABANELLI, Giorgio**
**48033 Cotignola (Ravenna) (IT)**

(74) Representative: **Milli, Simone**
**Bugnion S.p.A.**
**Via di Corticella, 87**
**40128 Bologna (IT)**

(56) References cited:
**EP-A1- 3 529 022** **WO-A1-2021/156742**
**WO-A2-2009/074999** **US-A- 3 932 094**

**Description**

This invention relates to an apparatus and a method for distributing pipes made of thermoplastic material for an extrusion line of said pipes.

More specifically, the distribution apparatus is mounted in a line for extruding pipes made of thermoplastic material. The extrusion line comprises an extrusion machine, which produces pipes in a continuous fashion, that is to say, at a constant and adjustable speed, and a cutting machine (hereinafter also referred to simply as a cutter), downstream of the extrusion machine, which continuously receives the pipe from the extrusion machine and cuts the pipe into pieces of predetermined and different lengths.

Downstream of the cutter machine, the line comprises a belling machine, which makes a bell on one of the ends of the pipe cut by the cutter.

These pipes produced by the extrusion line are made of thermoplastic material such as polypropylene (PP) and rigid polyvinyl clouro (PVC-U) and are produced and marketed according to standardised dimensional formats for nominal outer diameters, DN (mm), and nominal lengths, LN (mm), such as, respectively:

DN32, DN40, DN50, DN63, DN75, DN90, DN110, DN125 and DN160, LN150, LN250; LN500; LN1000; LN1500; LN2000 and LN3000.

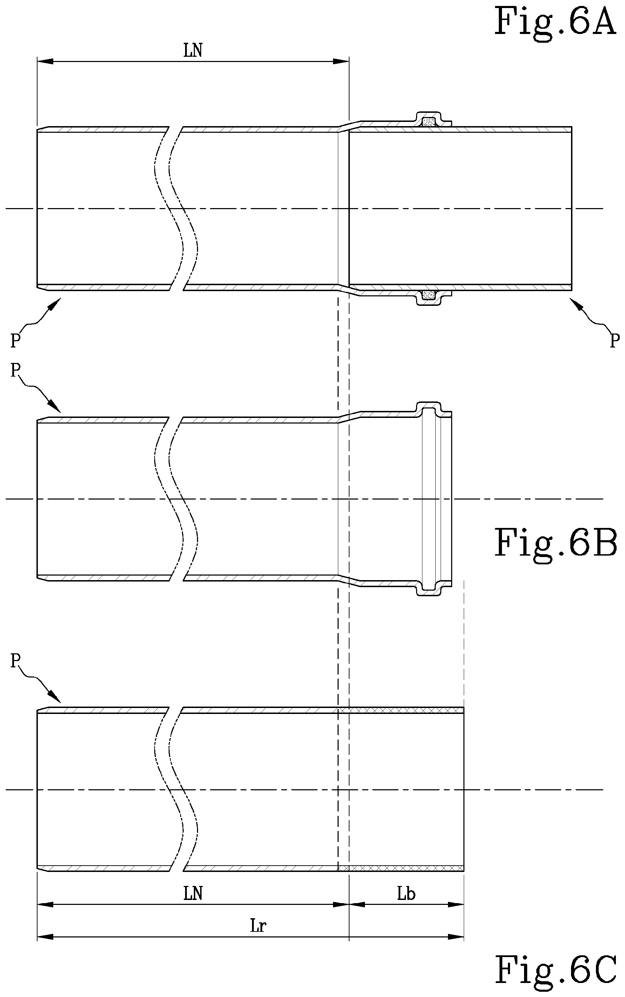

The actual length of the cut pipe Lr (expressed generally in mm), as clearly shown in Figure 6C, is the sum of the nominal value LN, of the value of the length Lb (mm) in the end of the pipe which must be shaped in the form of a bell. The length Lb varies depending on the type of bell and the diameter DN of the pipe.

For example, if 70mm is the length Lb in the PP pipes with diameter DN50, there are the corresponding actual lengths of the pipes which will be belled at the ends.

$$LN150 \rightarrow Lr=150 +70 =220mm$$

$$LN250 \rightarrow Lr=250 +70 =320mm$$

$$LN500 \rightarrow Lr=500 +70 =570mm$$

$$LN1000 \rightarrow Lr=1000 +70 =1070mm$$

$$LN1500 \rightarrow Lr=1500 +70 =1570mm$$

$$LN2000 \rightarrow Lr=2000 +70 =2070mm$$

$$LN3000 \rightarrow Lr=3000 +70 =3070mm$$

The belling machine receives from the outlet channel of the cutting machine the pipes cut to suitable length.

The pipes leave the cutting machine at the extrusion speed adjacent and in contact with each other pushed by the continuous extruded pipe.

The term "short pipes" means pipes of nominal length LN150, LN250, LN500 and LN1000; these pipes constitute the greatest production of the extrusion lines.

This need has resulted in a constant technical extension of the machines constituting the extrusion line of the pipe aimed at increasing the capacity for production of belled pipes of short length with high extrusion speeds.

There are prior art cutter machines, from patent documents EP0129515, EP3529022 and EP2008749 in the name of the same Applicant as this invention, which are effective for producing short cut pipes and capable of operating at high extrusion speeds.

With particular reference to the belling machine described in patent document EP3529022, this comprises a plurality of operating stations where the pipe is transported to perform the various operating steps.

The first station receives the cut pipe along the extrusion line through a supply channel. The supply channel of the belling machine receives each pipe moving at the speed of extrusion from the outlet channel of the pipes from the cutter machine. In the first station, by means of a suitable positioning device, the pipe received is moved longitudinally and then stopped in a precise position always parallel to the axis of extrusion.

From this position the pipe is then moved transversely to be located at the other processing stations.

This belling machine, when it reaches a productivity of 1200 bells per hour in quadruple belling makes a belled pipe every 3 seconds, so it must be able to perform the transfer cycle of the cut pipe from the channel for feeding pipes in the extrusion line to the subsequent processing station in less than 3 seconds. The cycle for transferring the cut pipe comprises the step of picking up the pipe from the feed channel of the belling machine. The step of transferring the pipe from the extrusion line to the belling machine comprises a succession of operating steps, such as, for example: picking up the pipe from the feed channel of the belling machine, longitudinal movement of the pipe; stopping the pipe with placing of the pipe in the infeed position in the subsequent processing station of the belling machine.

The picking up of the pipe requires a stop of the pipe arriving, but this stop can only occur if the pipe has been previously detached (that is, located at a distance) from the cut pipe which follows it and which pushes it at the extrusion speed under the action of the pipe being extruded.

For this reason, in order to perform the picking up, it is necessary to detach the pipe being picked up from the one upstream relative to the extrusion direction, which pushes it.

The detachment of the pipe is performed in the feed channel of the belling machine using a device for pulling the pipe.

Very briefly, the pipe is pulled by the pulling device in the direction of the extrusion line at a speed Vc greater than the extrusion speed Vext determining its detachment from the pipe which follows it (upstream relative to the conveying direction).

The pipe which follows the detached pipe remains in the outfeed channel of the cutting machine in a uniform rectilinear motion at the extrusion speed Vext.

When the pipe which follows is also detached by the pulling device, a distance $\Delta W$ of separation between the tail of the first pipe and the head of the second pipe which follows it is established between these two pipes being loaded in the feed channel of the belling machine, now moving at the same speed Vc.

Considering a belling machine configuration characterised by a value of sustainable pulling speed Vc in the feed channel, and by a sustainable time tp for operational picking up of the pipe from the belling machine, the characteristic operating parameter $\Delta S = Vc \times tp$ is determined,

where $\Delta S$ is the minimum separation distance which must exist between two pipes in the feed channel of the belling machine so that they are both picked up, compatibly with the pulling speed and the pick-up cycle time, from the belling machine.

For this reason, defining $\Delta W$ as the actual distance of separation of two pipes on the feed channel, that is to say, the distance between the tail of the first pipe and the head of the second pipe which follows it, the picking up of the pipes can only be performed if $\Delta W \geq \Delta S$.

The pulling and/or positioning devices may be of a different type, for example, a track or wheel drive unit which engages the pipe from above such as that shown in patent document EP0684124 by the Applicant.

Normally, in belling machines specialising in the processing of pipes made of thermoplastic waste the pulling and/or positioning device is of the motor-driven channel type, that is to say, a channel with motor-driven rollers or with motor-driven belts.

The channel for feeding the belling machine comprises two independent modules: a first module designed for detaching the pipe, called pipe infeed channel or detachment channel; a second module, next and aligned with the first, designed to stop and position the pipe, called the positioning channel.

The maximum speed limit of the detachment channel is normally imposed on the need to maintain repeatable and therefore feasible the subsequent step for stopping and positioning the pipe by the positioning channel. In fact, if the pipe pulled by the detachment channel arrives in the positioning channel too fast, the inertia of the pipe can make the stopping of the pipe unstable and imprecise. In practice, the maximum speeds which can be achieved with the detachment channel do not exceed 30 m/min, a speed always greater than the maximum extrusion speeds which are sustainable by the most modern extrusion lines for drainage pipes for buildings (it should be considered, in effect, that the maximum extrusion speeds are normally between 11 m/min and 18 m/min).

This type of configuration of the feed channel of the belling machine, due to the minimum arrival spacing of the pipes which it is necessary to have (parameter $\Delta W \geq \Delta S$), has performance limits in particular in the production of short pipes with high extrusion speeds.

In order to understand the above-mentioned limitations, two usual extrusion conditions are considered: production of pipes of equal length Lr and production of pipes of two different lengths alternated with each other Lra and Lrb with Lra>Lrb.

In both cases, the motion of the pipes occurs, substantially, at a uniform speed. For this reason, the simple kinematic correlation of the motion at a uniform speed of space travelled equal to the speed of the pipe for the time applies, and consequently the separation distance $\Delta W$ relates linearly to the extrusion speed Vext, at the pulling speed Vc and at the length of the pipes Lr.

Two different cases will be presented below.

Case 1: relative to the production of extrusion pipes of equal length Lr.

If the pipes are of equal length Lr, there is a detachment $\Delta W$ which is correlated to Lr, Vc and Vext with the kinematic relation (q1).

$$\Delta W = Lr \ (Vc/Vext\text{-}1)$$

Case 2: production of extrusion pipes having two different lengths, Lra and Lrb, alternated continuously.

According to a prior art technique, the belling machine comprises a surface for supporting and pulling the pipe of the channel for feeding the belling machine at a position just less than the supporting surface of the chute for the sliding of the pieces of pipe coming out from the cutter.

In this way the pipe is picked up by the pulling device of the feed channel, not when the end of the pipe reaches the pulling sector of the channel of the belling machine, but when the barycentre of the pipe, located at the centre line of the pipe, passes the start of the supporting and pulling surface of the detachment channel. In effect, in this condition, due to the effect of the relative weight of the pipe, the end of the pipe falls by gravity on the pulling sector of the detachment channel and is pulled at the speed Vc achieving the detachment from the pipe which follows it in motion at a lower speed Vext.

When the pipe which follows is also detached, a separation distance $\Delta W$ between the tail of the first short pipe Lrb and the head of the second long pipe Lra which follows it is determined and remains constant, also equal to the separation distance $\Delta W$ between the tail of the first long pipe Lra and the head of the second short pipe Lrb which follows it.

If the pipes are produced with a succession of sequences that alternate continuously two different lengths of pipe Lra and Lrb, with Lra>Lrb, where Lra = long length pipe, Lrb = short length pipe, with the different positioning in height of the supporting surfaces of the pipe between the detachment channel and chute of the pipes at the outfeed from the cutter, a detachment $\Delta W$ is determined which is mathematically associated with Lra, Lrb, Vc and Vext with the kinematic relationship (q2).

$$\Delta W = (Lra/2+ Lrb/2)(Vc/Vext\text{-}1)$$

In order to highlight the performance limits of this belling configuration a realistic practical example is considered, where there is the production of belled pipes made of PP with diameter DN50, with extension Lb to be formed in the form of a bell equal to 70 mm. In the case in question, the belling machine is operated with an operating time for picking up the pipe tp=2.7 sec and with speed of the feed channel Vc= 30m/min

The belling machine, with these parameters, is able to process the pipes up to Qmax=1200 bells/hour.

For this example condition, the above-mentioned formulas (q1) and (q2) calculate the maximum sustainable extrusion speed values Vext for achieving the detachment $\Delta W = \Delta S = Vc \times tp = 1350$ mm

In other words, the maximum value of the extrusion speed is evaluated for which the belling machine is able to pick up the pipes in the various real commercial lengths.

In effect, the need of the operator of the extrusion line is that of operating the extrusion machine at the maximum speed compatible with the belling machine, which is in fact the true bottleneck of the line.

In the case of production of extrusion pipes of equal length Lr, it can be seen from (q1) that the maximum extrusion speed Vext = Vc *(Lr/($\Delta$S+Lr)). This speed, for the following examples, can be calculated as follows:

$$— LN150 — \ \ \rightarrow Lr\text{=}150 +70 \text{=}220mm \ \ \ \ \rightarrow Vext = 4.2 \text{ m/min}$$

$$— LN250 — \ \ \rightarrow Lr\text{=}250 +70 \text{=}320mm \ \ \ \ \rightarrow Vext = 5.75 \text{ m/min}$$

$$L— LN500 — \ \ \rightarrow Lr\text{=}500 +70 \text{=}570m \ \ \ \ \rightarrow Vext = 8.9 \text{ m/min}$$

$$— LN1000 — \rightarrow Lr\text{=}1000 +70 \text{=}1070mm \ \rightarrow Vext = 13.2 \text{ m/min}$$

$$— LN1500 — \rightarrow Lr\text{=}1500 +70 \text{=}1570mm \ \rightarrow Vext = 16.1 \text{ m/min}$$

$$— LN2000 — \rightarrow Lr\text{=}2000 +70 \text{=}2070mm \ \rightarrow Vext = 18.1 \text{ m/min}$$

$$— LN3000 — \rightarrow Lr\text{=}3000 +70 \text{=}3070mm \ \rightarrow Vext = 20.8 \text{ m/min}$$

In the case, on the other hand, of the production of extrusion pipes having two different lengths, Lra and Lrb, alternated continuously, the maximum extrusion speed Vext = Vc ((Lra/2+Lrb/2)/($\Delta$S+Lra/2+Lrb/2)) is obtained from (q2) for the following pipes:

- LN1000 - LN150 - → Lra =1070mm; Lrb=220mm → Vext = 9.7 m/min - LN2000 - LN150 - → Lra =2070mm ; Lrb=220mm → Vext = 13.8 m/min - LN3000 - LN150 - → Lra =3070mm ; Lrb=220mm → Vext = 16.5 m/min - LN1000 - LN250 - → Lra =1070mm ; Lrb=320mm → Vext = 10.2 m/min - LN2000 - LN250 - → Lra =2070mm ; Lrb=320mm → Vext =  14.1 m/min - LN3000 - LN250 - → Lra =3070mm ; Lrb=320mm → Vext = 16.7 m/min - LN1000 - LN500 - → Lra =1070mm ; Lrb=570mm → Vext = 11.3 m/min - LN2000 - LN500 - → Lra =2070mm ; Lrb=570mm → Vext = 14.8 m/min - LN3000 - LN500 - → Lra =3070mm ; Lrb=570mm → Vext = 17.2 m/min

It is evident that in the production of pipes of equal length Lr for the long pipes there are no significant penalisations within the limit of sustainable extrusion speed.

On the other hand, in the short pipes, that is to say, those with a nominal length less than 1 metre, there are significant penalties in the extrusion speed and it is not even possible to saturate the production capacity of the belling machine which, as already mentioned, can reach a maximum productivity (Q) of 1200 bells/hour for this size of pipe.

In effect, for the short pipes with short lengths there is:

- LN150 - → Lr=150 +70 =220mm→ Vext = 4.2 m/min → Q = (4.2 x 60)/0.32 = 1145 bells/hour - LN250 - → Lr=250 +70 =320mm→ Vext = 5.75 m/min → Q = (5.75 x 60)/0.32 = 1075 bells/hour - LN500 - → Lr=500 +70 =570mm→ Vext = 8.9 m/min → Q = (8.9 x 60)/0.32 = 937 bells/hour - LN1000 - → Lr=1000 +70 =1070mm→ Vext = 13.2 m/min → Q = (13.2 x 60)/0.32 = 740 bells/hour

In the production of two alternate lengths of pipe, with short pipe alternated with long pipe, the maximum sustainable extrusion speeds are higher, but compared with the corresponding production of pipe with equal and short length, the number of short pipes belled in 1 hour is considerably lower, but offset by an equal number of long pipes belled.

For example:

- LN2000 - LN250 - → Lra =2070mm ; Lrb=320mm → Vext = 14.1 m/min

$$Q = (14.1 \times 60)/(0.32+2.07) \times 2= 710$$

bells/hour of which 355 on pipe LN250 and 355 on pipe LN2000.

The most significant penalties are, consequently, manifested in the production of successions of pipes with sequences of pipes formed by a long pipe alternated with 2 or more short pipes, since the limit in the maximum sustainable extrusion speed is that corresponding to the production of pipes with a single length equal to the short length.

In these conditions, the device for transferring the pipes to the belling machine becomes, to all intents and purposes, the bottle neck of the extrusion line.

According to the prior art, a further system adopted for increasing the picking up capacity of the belling machine, aimed at reducing the minimum time for picking up the pipe, is that of configuring the belling machine with a further operating station in such a way as to divide the operating steps for picking up the pipe into two stations: a first station which detaches, stops the pipe and moves it transversally from the extrusion line to the second station. In the second station the pipe received is located in the infeed position in the subsequent processing stations of the belling machine and the transversal movement of the pipe is performed into the subsequent processing station of the belling machine.

In short, some steps are performed in parallel to allow the loading speed of the belling machine to be increased.

This belling configuration is, on the other hand, much more complex and expensive than those described above, and it is also characterised by a large transversal dimension of the belling machine (which is not always compatible with the spaces of the production plants). This solution is therefore not always applicable.

The aim of the invention is to provide an apparatus and a method for distributing pieces of pipes made of thermoplastic material towards the belling machine which overcome the above-mentioned drawbacks.

A further aim of the invention is to provide an apparatus and a method for distributing pieces of pipes made of thermoplastic material towards the belling machine which allow the performance, in terms of productivity, of the extrusion line to be increased.

Yet another aim of the invention is to provide an apparatus and a method for distributing pieces of pipes made of thermoplastic material towards the belling machine which is particularly flexible, and which is able to also distribute to the belling machine sequences of pieces of different lengths, at particularly high extrusion speeds.

The technical characteristics of the invention are clearly described in the claims below and its advantages are apparent from the detailed description which follows, with reference to the accompanying drawings which illustrate a preferred embodiment of the invention provided merely by way of example without restricting the scope of the inventive concept, and in which:

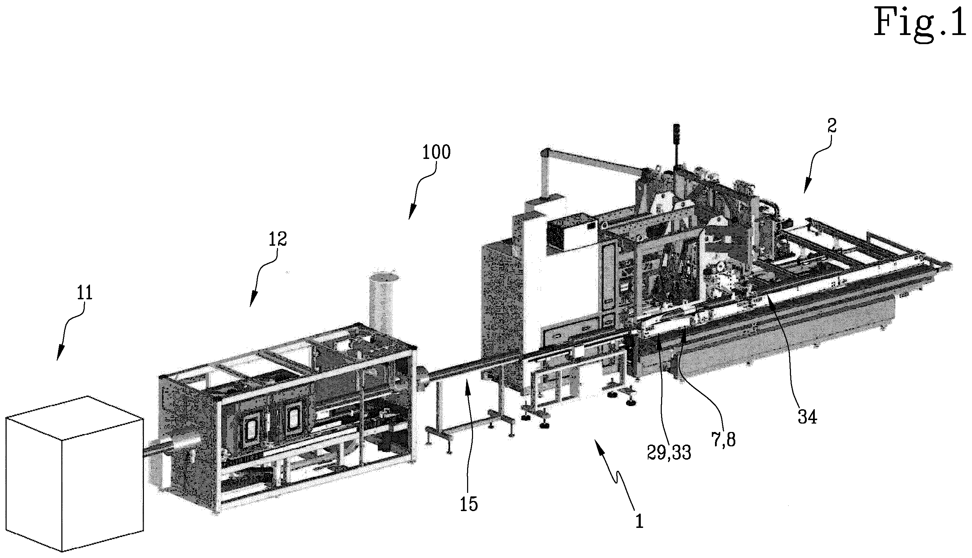

- Figure 1 is a perspective view of a plant for making pipes made of thermoplastic material comprising the distribution apparatus according to the invention;

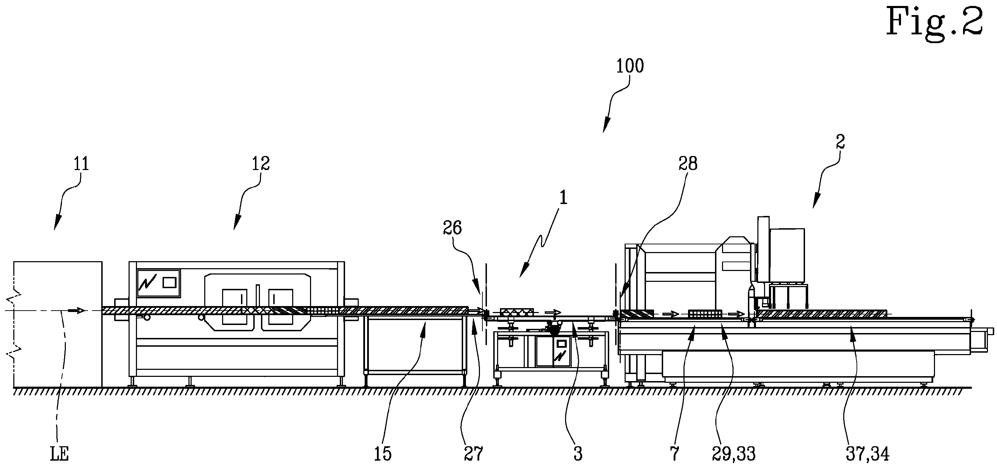

- Figure 2 is a side view of the plant for making pipes made of thermoplastic material illustrated in Figure 1;

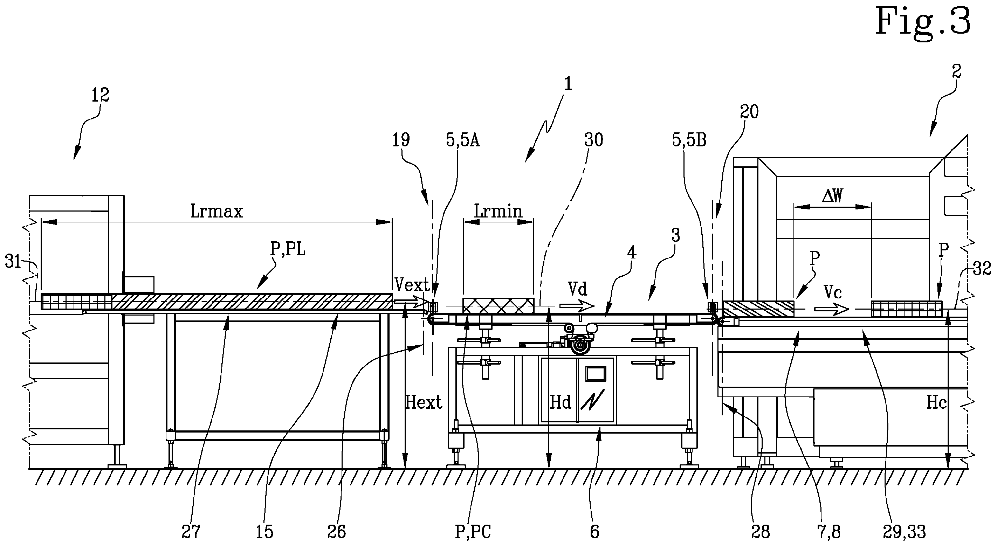

- Figure 3 is a side view of a portion of the plant for making pipes made of thermoplastic material illustrated in Figure 2;

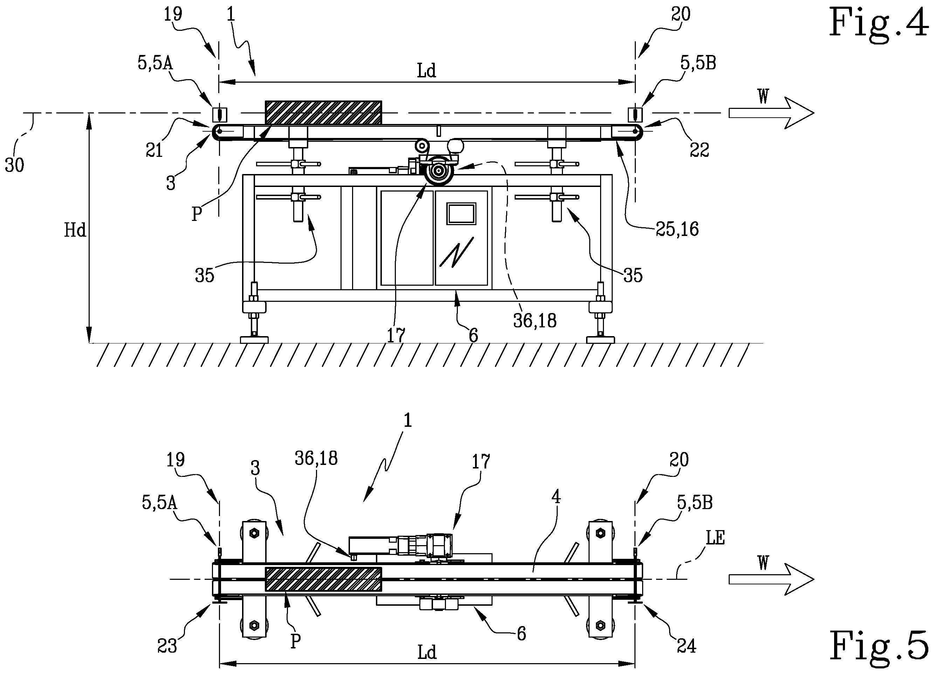

- Figures 4 and 5 illustrate, respectively, a side view and a view from above of the distribution apparatus according to the invention, illustrated also in Figures 1 to 3;
- Figures 6A, 6B, 6C schematically illustrate, respectively, the coupling of the ends of two pipes according to the prior art techniques;
- Figures 7 and 8 schematically illustrate the feeding of the belling machine according to prior art techniques;
- Figures 9 and 10 schematically illustrate the feeding of the belling machine using the apparatus according to the invention, in different operating conditions.

With reference to the accompanying drawings, the numeral 1 denotes an apparatus for distributing sequences of pipes P made of thermoplastic material to a belling machine 2 (hereinafter also referred to simply as the belling machine 2).

Each sequence comprises at least a first pipe P1, a second pipe P2 and a third pipe P3.

It should be noted that the pipes P of each sequence S are at least partly of different lengths, and that for each sequence there is at least one pipe of maximum length (that is, a long pipe PL) and at least one pipe of short length (short pipe PC).

It should also be noted that each sequence S is repeated over time, both in terms of type of pipes and in terms of order, that is to say, if a sequence consists, in the time order in which they arrive at the apparatus 1, of two short pipes PC and a long pipe PL, in general they will present themselves to the apparatus 1 consisting always, in order, of two short pipes PC and a long pipe PL.

The apparatus 1 comprises a conveyor 3 for distributing pipes made of thermoplastic material, defining a path 4 for conveying the pipes P.

It should be noted that, preferably, the conveyor 3 is a belt conveyor, and the conveying path 4 of the pipes P is defined by the upper surface, touched by the pipes P and designed to make contact with the pipes P.

Moreover, the apparatus 1 comprises at least one sensor 5 for detecting pipes, designed to detect the presence of pipes P in a predetermined zone of said conveyor 3. In practice, the sensor 5 for detecting pipes is able to detect the arrival of a pipe in a predetermined region.

According to another aspect, the apparatus 1 comprises a control and operating unit 6, connected to the sensor 5 to receive a signal indicating the presence of pipes in the predetermined zone and at the distribution conveyor 3 for actuating it on the basis of the signal indicating the presence of pipes.

It should be noted that the control unit 6 may be of the distributed or integrated type, may comprise hardware or software elements of any type. The control unit 6 may also be remote with respect to the apparatus 1, or integrated in other machines not forming part of the apparatus 1, for example in a machine for cutting pipes 12 or in a belling machine 2.

The control unit 6 is also configured for actuating the distribution conveyor 3, on the basis of the presence signal of the pipes, so as to move the pipes P along the conveying path 4 at a different speed Vd for the various pipes P of the sequence S.

The conveyor 3 is configured as a channel for supporting and pulling the cut pipes P in the direction LE of the extrusion line and in the direction W of motion of the extruded pipe.

The conveyor 3 is motor-driven and may be of various types, for example: flexible translating belt, translating chains equipped with gripping caps made of elastomer, rollers or rotary wheels.

In the description of the invention reference will be made to a conveyor 3 of the flexible belt type 25, which supports the pipe P from below, and pulls it along a conveying path 4.

Alternative embodiments of the conveyor 3 are included in the scope of protection, such as, for example, those made with rotary wheels or drive tracks which engage in the upper part of the supported pipe and, according to which, the pipe P is slidable on a sheet chute or on idle rollers.

According to another aspect, the apparatus comprises a channel 7 for feeding the belling machine 2 equipped with a unit 8 for conveying the pipes, positioned downstream of the distribution conveyor 3 for receiving from it the pipes P.

Preferably, the conveyor 3 is configured so that a height Hd of the axis 31 of the pipe lying in the conveying path 4 is greater than a height Hc of the axis 32 of the pipe P lying on the feed channel 7 and less than an extrusion height Hext of the axis 31 of the pipe P upstream of the conveyor 3,
that is,

$$Hc < Hd < Hext.$$

The conveyor 3 allows the cut pipes coming from the cutter machine 12 one at a time to be detached and transferred into the feed channel 7 of the belling machine 2.

The conveyor 3 allows the generation, between the pipes, of a detachment ∆W which allows the belling machine 2 to pick up all the pipes P arriving in the feed channel 7 (for processing them correctly).

The conveyor 3 is interposed between the feed channel 7 of the belling machine 2 and the outlet channel 15 of the pieces of pipes made by the cutting machine 12.

The conveyor 3 receives the pipes from the outlet channel 15 of the cutting machine 12, pipes adjacent to each other and with continuous motion with extrusion speed Vext.

The conveyor 3, using motor-driven pulling elements 16, allows the pulling in the direction of the extrusion line LE of the pipes P for transferring them, one at a time, in the feed channel 7 of the belling machine 2.

According to another aspect, the conveyor 3 is configured for conveying one pipe P at a time of the sequence of pipes, that is to say, the conveying path 4 is affected by one pipe P at a time.

Preferably, the length Ld of the conveying path 4 of the conveyor 3 is greater than half the length Lrmax of the pipe of maximum length of the sequence of pipes P.

Preferably, the length Ld of the path 4 of the conveyor 3 is greater than the sum of the length Lrmin of the pipe P with minimum length of the sequence S of pipes P and a spacing ∆S between the pipes in the feed channel calculated as ∆S = Vc x tp, where Vc is the operating speed of the transport unit 8 of the feed channel 7 (that is, the conveying sped of the pipes on the transport unit 8) and tp is the cycle time for picking up a pipe of a belling machine 2 downstream of the apparatus 1 (that is, the pick up cycle time, between one pipe and the next).

According to another aspect, the speed Vd for moving the pipe P on the conveyor 3 at the conveying path 4 of each pipe P is greater than a speed Vext for extrusion of the pipe P, upstream of the apparatus 1.

The extrusion speed Vext is the extrusion speed of the extrusion machine 11, which corresponds substantially to the speed of arrival of the pipes P at the cutting machine 12 and the speed of arrival of the pipes P at the apparatus 1.

Preferably, the length Ld of the conveying path 4 of the conveyor 3 is less than the length Lrmax of the pipe TL of maximum length of the sequence of pipes P.

According to another aspect, the control and operating unit 6 is configured for calculating the speeds of movement of the conveyor 3, for moving the pipe P at the path 4, on the basis of the lengths and order of arrival of the pipes P of the sequence of pipes.

In short, knowing the extrusion speed Vext and the current movement speed Vd, the control unit 6 processes the signal received from the sensor 5 to determine, with respect to the conveyor 3, the position status of the pipe P arriving and of the pipe preceding it. The control unit 6 determines the speed Vd suitable for each pipe P arriving in the sequence and, by means of the drive, modifies the movement speed Vd of the conveyor 3 starting from when the pipe P preceding the pipe arriving is no longer pulled by the distributor.

According to another aspect, the control and operating unit 6 is configured for calculating the speed of movement Vd of the pipe on the conveyor 3 (at the path 4) on the basis of an extrusion speed Vext, that is to say, the speed of extrusion of the pipe by the extrusion machine 11.

The extrusion speed Vext also corresponds to the speed of the pipes upstream of the apparatus 1.

According to another aspect, the at least one sensor 5 comprises at least a first sensor 5A for detecting pipes, positioned at the infeed to the path 4 of the conveyor 3 (that is to say, in an inlet zone to the conveyor 3).

According to another aspect, the at least one sensor 5 comprises at least a first sensor 5B for detecting pipes, positioned at the outfeed from the path 4 of the conveyor 3 (that is to say, in an outlet zone to the conveyor 3).

According to another aspect, the control and operating unit 6 is configured for adjusting the speed of the conveyor 3 on the basis of the signal of the first sensor 5A and/or of the second sensor 5B.

According to another aspect, the control and operating unit 6 is configured to reduce the speed Vd of the conveyor 3 when the second sensor 5B detects the presence of a pipe P, preferably the speed being reduced on the basis of a deceleration ramp.

According to another aspect, the first sensor 5A and the second sensor 5B are preferably photocells.

Preferably, the first sensor 5A is located in such a way that its intercepting barrier lies in the reference plane 19 which distinguishes the start of the conveyor 3.

The second sensor 5B is located in such a way that its intercepting barrier lies in the reference plane 20 which distinguishes the end of the conveyor 3.

The position in height of the sensors 5 must be such that the intercepting beams interfere with the cut pipe P located between the vertical planes 19 and 20 which delimit the conveyor 3.

The first sensor 5A provides the control unit 6 with information that the pipe during transfer on the conveyor 3 is (completely) loaded on the conveyor 3; this occurs as soon as the intercepting beam of the first sensor 5A does not interfere with (comes into contact with) the pipe which follows it, that is, when the tail of the pipe being transferred on the conveyor 3 passes the reference plane 19 at the start of the apparatus 1. The second sensor 5B provides the control unit 5 with information that the head of the pipe P during transfer towards the belling machine 2 has reached the reference plane 20 at the end of the conveyor 3.

The signal of the first sensor 5A allows the control unit 6 to determine the time, that is, the instant, in which the transfer speed Vd of the conveyor 3 must be varied from the specific value for the pipe during transfer to the value of the next pipe arriving in the conveyor 3 from the outlet channel 15 of the cutting machine.

In effect, Vext, the various Vd values, the various lengths of the pipes P and the order of the pipes P in the sequences S arriving in the conveyor 3 coming from the cutting machine 12 are known.

The control unit 6 is therefore able to calculate the speeds for each pipe being managed on the conveyor 3.

The signal of the second sensor 5B allows, on the other hand, the control unit 6 to set the speed of the conveyor 3 for decelerating the pipe P being transferred, from the conveyor 3, to the feed channel 7 of the belling machine 2.

It should be noted that the deceleration ramp is advantageous in order to stabilise the movement of the pipe P in the transient step of passage of the pipe P from the pulling speed Vd to the lower pulling speed Vc set by the pulling element 33 of the detachment channel 29.

Preferably, the apparatus 1 comprises at least one further sensor 36 for detecting the position and/or speed of the moving belt 25 of the conveyor 3.

The sensor 36 is operatively connected to the control unit 6, for transmitting a position and/or speed signal of the moving belt 25 of the conveyor 3.

Preferably, the presence of a sensor 36 which measures (continuously) the position and speed of the moving belt 25, and therefore the position and speed of the pipe P, facilitates automatic control of the conveyor 3 (in particular according to a closed loop control).

For this reason, the sensor 36 allows a better control precision of the movement of the pipe on the conveyor 3 and, consequently, the reaching of higher productivity performance levels.

The sensor 36 may be integrated for example in the drive of the conveyor 3, or it may be a different sensor, coupled to the conveyor 3, for example an angular wheel encoder, with the encoder wheel in contact and driven by the flexible belt 25.

According to another aspect, the apparatus 1 further comprises a memory, connected to the control and operating unit 6, and configured for storing values of the length of the pipes of the sequence of pipes and the order of arrival (in association with the length of the pipes), at the distribution conveyor 3, of said pipes of the sequence of pipes.

It should also be noted that, preferably, the apparatus 1 comprises a user interface, configured to allow setting of at least the values of length of the pipes of the sequence of pipes and the order of arrival (in association with the length of the pipes).

Described below, in more detail, are some aspects of the apparatus 1 according to the invention.

The pulling speed (Vd) set by the apparatus 1 to the pipes P adopts variable values, that is to say, different for each pipe, and in any case greater than the extrusion speed Vext.

In effect, the different pulling speeds of the different pipes on the apparatus 1 Vd will always be greater than the extrusion speed Vext and they will be such as to transfer the cut pipes into the feed channel 7 of the belling machine 2 one at a time.

The apparatus 1 is conveniently applied in the production of successions of pipes formed by equal sequences of pipes which are repeated continuously; sequences composed of more than two pipes of different lengths.

In these circumstances, for each individual pipe of the sequence, the apparatus 1 calculates a drive speed Vd of the conveyor 3 (corresponding, in the specific case illustrated, to the speed of movement of the pipe P along the path 4) which is different between the various pipes of the same sequence, but equal for the corresponding pipes of each sequence S of the succession of pipes being produced.

Therefore, the apparatus 1 performs a cycle of speed Vd which is repeated in each sequence S of the succession of pipes.

In certain particular circumstances, some of the values of the specific cycle of speed Vd of the sequence may be equal (that is to say, pipes of a same sequence may have equal speeds), but in general the cycle speed comprises as many speed values as there are pipes of the sequence with two or more different speed values.

For this reason, according to the specific embodiment illustrated, the conveyor 3 comprises a drive unit 17 which allows the speed Vd of the conveyor 3 to be varied.

Moreover, the conveyor 3 comprises a flexible belt 25 which defines in its portion the above-mentioned conveying path 4.

For example, the drive unit 17 may be an electric motor, preferably of the asynchronous type controlled by an inverter, or a brushless type servomotor preferably equipped with an electronic transducer 18 for measuring the revolutions of the drive shaft over time.

The conveyor 3 is provided with two reference planes 19 and 20 perpendicular to the feed direction of the pipes loaded in the apparatus 1. The planes 19, 20 delimit, respectively, the start and the end of the conveyor 3 in its useful length Ld and actual drive of the pipe P.

The horizontal distance between the two reference planes 19, 20 defines the length Ld of the apparatus 1.

In the example configuration illustrated, the planes 19, 20 correspond to those which contain the horizontal axes 21 and 22 of the end rollers 23 and 24 above which the belt 25 is wound.

The horizontal distance between the two axes 21 and 22 defines the length Ld of the apparatus 1.

In order to facilitate the description of the operation of the apparatus 1, the reference plane 19 for starting the conveyor 3 is assumed to coincide with a plane 26 which delimits the end of the supporting chute 27 of the cutting machine 11, upstream of the apparatus 1 and, moreover, the reference plane 20 for ending the conveyor 3 is assumed to coincide with the reference plane 28 at the start of the detachment channel 29.

The rectilinear pulling direction of the pipe of the conveyor 3 coincides with the axis of extrusion (of the extrusion machine 11) except for the height on the vertical plane.

In particular, with reference to the longitudinal axis 30 of the pipe pulled by the conveyor 3, the height of the axis of the pipe pulled Hd is less than the corresponding height of the extrusion axis Hext, that is, below the longitudinal axis 31 of the pipes coming out from the cutting machine 12. On the other hand, the height Hd is greater than the vertical height Hc of the axis 32 of the pipe when moved by the devices (33, 34) for pulling pipes of the feed channel 7 of the belling machine 2.

It should be noted that the conveyor 3 is preferably provided with height adjustment means 35 which can be used to adjust the height of the belt 25 of the conveyor 3 in such a way that the height Hd corresponds to the following relation:

$$Hc < Hd < Hext$$

In this adjustment condition, the cut pipe P is effectively picked up by the conveyor 3 when the barycentre of the pipe P, that is to say, the centre line of the pipe, passes beyond the chute 27 for supporting the pipes coming from the cutting machine 12, that is, when it passes beyond the vertical start plane 19 of the conveyor 3.

It should be considered that, due to the effect of the relative weight of the pipe P, the end of the pipe P (head of the pipe P) falls and rests in the pulling sector of the conveyor 3.

In the same way, the pipe P transferred from the apparatus 1 is actually **picked up** by the pulling device 33 of the detachment channel 29 of the belling machine 2 when its centre line passes beyond the vertical end plane 20 of the conveyor 3, since the centre of gravity of the pipe falls in the pulling element 33 of the detachment channel 29 of the belling machine 12.

Lrmin indicates the shorter length of pipe PC and Lrmax indicates the longer length of pipe PL designed to be controlled by the apparatus 1.

The belling machine 2 is distinguished by a time for picking up the pipe tp (pick-up time between one pipe P and another) and by a speed VC for pulling the pipe in the feed channel 7, therefore the parameter $\Delta S = Vc \times tp$ is defined.

In order to guarantee operation of the belling machine 2, the apparatus 1 must perform a detachment $\Delta W$ between each pipe and the next on the feed channel 7 of the belling machine 2 with $\Delta W \geq \Delta S$.

According to an aspect, the length Ld of the conveyor 3 (as defined above) must be greater than the value $\Delta S+Lrmin$.

Simultaneously, so that even the longest pipe of the range can be processed by the apparatus 1, the value of Ld must be greater than Lrmax/2.

With reference to the production of pipes to which the apparatus 1 is applicable, therefore with the production of successions of pipes P formed by sequences S of pipes P which are repeated continuously, consisting of p pipes with $p \geq 3$ characterised by different values of length with $q \geq 2$, the particular features of the apparatus 1 are summarised with the set of the following conditions and relations:

- Pulling only one pipe at a time on the conveyor 3;

-

$$Hc < Hd < Hext;$$

-

$$Ld > \Delta S + Lrmin;$$

-

$$Ld > Lrmax/2;$$

-

$$Vd > Vext;$$

- speed cycle Vd which is repeated in each sequence of the succession of pipes, consisting of specific values for each pipe of the sequence with 2 or more different speed values.

It should be noted that the apparatus 1 pulls and transfers to the feed channel 7 of the belling machine 2 only one cut pipe P at a time coming from the cutter machine 12.

Advantageously, so as not to make necessary speeds Vd which are too high, and therefore to make the apparatus 1 unnecessarily complex, bulky and expensive, it is preferable to limit the length Ld of the apparatus 1 to values not greater than Lrmax, so it is advantageously convenient to respect the relation:

$$Ld < Lrmax.$$

The apparatus 1 is particularly effective in the continuous production of sequences S of pipes formed by sequences S of pieces of pipe consisting of two or more short pipes of length Lrb and a long pipe Lra, where the length Lrb is less than the length Lra (with Lra = length of the long pipe PL, Lrb = length of the short pipe PC).

Following, in the examples below, the direction W of the extrusion motion, if n is the number of short pipes of the sequence S, Lrb1 is the first short pipe of the sequence, whilst Lrbn is the last short pipe which precedes the long pipe Lra of the sequence.

The successions S of pipes P are shown below with simple symbolism wherein the composition of the sequence S is that in square brackets and the direction of the extrusion motion is that which goes from left to right.

....[Lra - Lrbn-... - Lrb1] - [Lra - Lrbn-... - Lrb1] - [Lra - Lrbn-... -Lrb1] ..

If 1 is the number of short pipes in the sequence (that is, n=1), the succession of pipes coincides with the condition of production of long pipe Lra alternated with short pipe Lrb:

$$....[Lra - Lrb] - [Lra - Lrb] - [Lra - Lrb] .....$$

If 2 is the number of short pipes (that is, n=2) then:

$$... [Lra - Lrb2 - Lrb1] - [Lra - Lrb2 - Lrb1] - [Lra - Lrb2 - Lrb1] -....$$

If 3 is the number of short pipes of the sequence (that is, n=3) then:

.... [Lra - Lrb3 - Lrb2 -Lrb1] - [Lra - Lrb3 - Lrb2 -Lrb1] - [Lra - Lrb3 - Lrb2 -Lrb1]....

As already described, a functional feature of the apparatus 1 is that for each individual pipe of the sequence the apparatus 1 imposes a pulling speed Vd (speed of the conveyor 3) which is different between the various pipes of the sequence S, but equal for the corresponding pipes P of each sequence S of the succession of pipes P being produced.

So the cycle of speeds Vd will be: Vdb1,., Vdbn, Vda., with the cycle which is repeated with each sequence S of pipes P.

The apparatus 1, by means of the control unit 6, determines and imposes on the conveyor 3 the cycle of speeds Vd.

It should be noted that the speeds Vd are, preferably, calculated on the basis of the process data transferred from the electronic control unit of the cutting machine 12, such as: extrusion speed, lengths and order of the pipes in the sequences arriving in the apparatus 1.

As mentioned above, the apparatus 1 is advantageous in the production of pipes P with repeated and identical sequences S of pipes of different lengths (Lra, Lrb).

It should be noted, however, that in the production of belled pipe P where the apparatus 1 is not advantageously used to increase the performance, as in the production of pipes P of equal length or pipes P having two different alternating lengths (that is, short pipe, long alternated pipe), there is no need to remove the apparatus 1 or stop it but it is advantageous to operate the conveyor 3 as follows, that is to say, according to the following operational settings.

According to the above-mentioned operational settings, it is possible to position the conveyor in height in such a way that Hd = Hext and adjust the conveyor 3 in speed Vd for making a motion of the pulling element at a constant speed of extrusion of the pipe Vd = Vext.

In this operational settings condition, the apparatus 1 accompanies towards the feed channel 7 of the belling machine 2 the cut pipes coming from the cutting machine 12, not altering the speed.

This method of use eliminates the drawbacks of accidental breakdown of the succession of pieces of pipe coming out from the cutting machine 12; In effect, the pieces of pipe P, if they are not accompanied, would push each other before being detached in the feed channel 7 of the belling machine 2.

Keeping the flexible belt 25 of the conveyor 3 stationary and therefore using it as a simple support for guiding the cut pipes P as they move at the extrusion speed Vext is not convenient, since the belt exerts on the pipes a friction action which does not favour the regular sliding of the cut pipes towards the belling machine 2; consequently, there would also be wear on the belt 25.

According to another aspect, a plant 100 for making pipes made of thermoplastic material is also defined, comprising:

-    a machine 11 for extruding a thermoplastic pipe, operating at a predetermined extrusion speed Vext;
-    a machine 12 for cutting pipes made of thermoplastic material designed to cut the pipe extruded from the extrusion machine 11 into pieces of pipe;
-    a belling machine 2, designed to form a bell on one end of said pieces of cut pipe;
-    an apparatus 1 for distributing the pipes as described above, interposed between the cutting machine 12 and the belling machine 2, for distributing the pipes arriving from the cutting machine 12 to the belling machine 2.

According to another aspect, a method is also defined for distributing pipes P made of thermoplastic material to a belling machine 2, comprising the following steps:

-    preparing a conveyor 3 for distributing pipes made of thermoplastic material, defining a path 4 for conveying the pipes P;
-    preparing at least one sensor 5 for detecting pipes, designed to detect the presence of pipes P in a predetermined zone of said conveyor 3 (preferably an inlet zone);
-    feeding to the conveyor 3 a plurality of predetermined identical sequences of pipes P, each comprising, in the order of arrival, n ≥ 2 pipes of equal minimum length (PC) and a pipe of maximum length (PL),
-    adjusting the speed of the conveyor 3 on the basis of the signal of the sensor 5, representing the presence of a pipe in the predetermined zone, and the type of pipe P of the sequence S, so as to move the conveyor 3 at different speeds for different pipes P of each sequence S, with said speeds all being greater than the arrival speed Vext, that is to say, of extrusion, of said pipes at the conveyor 3 and with said speeds being equal for the same pipes P of different sequences S, that is to say, for pipes having a same order of arrival and length of different sequences S.

According to another aspect, for sequences formed, in order of arrival, by n ≥ 2 pipes of equal minimum length Lrb and a pipe of maximum length Lra, preferably and advantageously the speed is adjusted according to the following relations:

- the speed of the first pipe of minimum length Vdb1 of the sequence is greater than the speed Vda of the pipe of maximum length of the sequence, that is to say Vdb1 > Vda;
- the speed Vdbi of the i-th pipe with minimum length is greater than the speed Vdbi+1 of the i-th+1 pipe of minimum length, that is to say,

$$Vdbi > Vdbi+1 \text{ with } i=1…n-1.$$

It should be noted that the term "i" means the order of arrival of the short pipes to the apparatus 1.

It should be noted that, according to the proposed method, the speed of the pipes P of minimum length (short pipes) after the first is gradually decreasing, whilst the speed of the first pipe of minimum length (short pipe) is greater than that of the pipe of maximum length (long pipe).

According to another aspect, the method also comprises:

- a step of preparing a feed channel 7 of the belling machine 2, positioned downstream of the distribution conveyor 3 for receiving from it the pipes,
- a step of transferring said pipes P from the conveyor 3 to the feed channel 7,
- and a step of picking up one pipe at a time from the feed channel 7 of the pipes P and positioning it at a first processing station of the belling machine 2.

According to an aspect, said speeds Vd of the pipes P are determined in such a way as to have between the pipes P, at the end of the path 4, a spacing ΔW greater than or equal of the product between the conveying speed Vc of the pipes P on the transport unit 8 of the pipes P and the cycle time tp for picking up the pipes P (cycle time tp corresponding to the picking up between one pipe and another by the belling machine 2, that is to say:

$$ΔW ≥ ΔS$$

Where ΔS= Vc x tp.

**In** this way, it is guaranteed that the belling machine 2 can operate in optimum conditions, that is to say, maximising its productivity as well as the overall productivity of the plant for the sequence of pipes P being processed.

According to another aspect, the speed Vdb1 of the first pipe of minimum length corresponds to the maximum sustainable speed of the conveyor 3.

Basically, according to this aspect, the speed Vdb1 of the first pipe of minimum length is set substantially equal to the maximum speed (condition of maximum performance) of the conveyor 3.

According to another aspect, the method comprises the following steps:

- extruding, by means of an extrusion machine 11, a pipe made of thermoplastic material at an extrusion speed (Vext) and feeding said pipe to a cutting machine 12 for dividing said extruded pipe into individual pipes P each having a first and a second end;
- actuating all the steps according to the method for distributing pipes P made of thermoplastic material to a belling machine 2.

Some aspects of the method described in the introduction will now be described in greater detail.

Given an extrusion production of a succession of pipes P formed by sequences consisting, in the order of arrival, of n ≥ 2 short pipes of length Lrb and a long pipe of length Lra such that Lra>Lrb, where (with direction of extrusion motion from left to right)

... [Lra - Lrbn - ...-Lrb1] - [Lra - Lrbn - ...-Lrb1] - [Lra - Lrbn - ..-Lrb1] ....

and indicated with:

Vdb1, pulling speed of the first short pipe PC of the sequence S;
Vda pulling speed the long pipe PL of the sequence S;
Vdbi puling speed of the i-th short pipe PC of the sequence S;
Vdbn pulling speed of the last short pipe PC of the sequence S;

it should be noted that, according to the cutting method, in order to make in the feed channel of the belling machine 12 detachments between the pipes $\Delta W \geq \Delta S$, the feed speed Vdb1 set for the first short pipe PC of the sequence S must be the higher than those set for the other pipes (short PC and long PL) of the sequence S, and therefore the following condition applies in general:

$$Vdb1 > Vda \text{ and } Vdbi > Vdbi+1 \text{ with } i=1\ldots(n-1).$$

In order to make the experimental activity of determining the optimum Vd values less laborious for a sequence of pipes being processed, it is convenient to consider as a first reference theoretical Vd values obtained by means of mathematical algorithms.

It should be noted, therefore, that the control unit 6 may be, advantageously, configured to perform one or more of the calculation methods described below.

In effect, another advantage of the apparatus 1 according to the invention is to determine, by means of mathematical algorithms or formulas, theoretical optimum Vd values adopted as known certain parameters and the sequence of the pipes (orders and lengths).

The algorithm for calculating the speeds Vd sets the condition for the operation of the conveyor 3 such as $\Delta W \geq \Delta S$; in particular in the limit condition, optimal for productivity performance, $\Delta W = \Delta S$

Of significant interest is the algorithm which allows the determination of the various Vd values associated with each pipe P forming the sequence S of the succession of pipes P of the extrusion process when the sequence consists, in the order of arrival, of n short pipes of length Lrb and a long pipe of length Lra (with Lra>Lrb) where:

...[Lra - Lrbn - ...-Lrb1] - [Lra - Lrbn - ...-Lrb1] - [Lra - Lrbn - ...-Lrb1] ....

In effect, for producing successions of pipes P in sequences S consisting of n short pipes Lrb and a long pipe Lra, in the construction and functional configuration of the apparatus 1 described above (with motion of the pipes at a uniform extrusion speed Vext) considering the optimum condition for all the pipes of detachment $\Delta W = \Delta S$, as well as the transport condition of one pipe at a time on the conveyor 3, it is shown that Vext, Vda and Vdbi with i = 1---n are related by the following system (K) of linear equations

$$(K): \begin{cases} \left(\Delta S + \frac{Lrb}{2} + \frac{Lra}{2}\right)\frac{1}{Vc} + \frac{L_D}{V_{Da}} = \left(\frac{Lrb}{2} + \frac{Lra}{2}\right)\frac{1}{Vext} + \frac{L_D}{V_{Db1}} \\[2ex] \left(\Delta S + \frac{Lrb}{2} + \frac{Lra}{2}\right)\frac{1}{Vc} + \frac{L_D}{V_{Dbn}} = \left(\frac{Lrb}{2} + \frac{Lra}{2}\right)\frac{1}{Vext} + \frac{L_D}{V_{Da}} \\[2ex] (\Delta S + Lrb)\frac{1}{Vc} + \frac{L_D}{V_{Dbi}} = \frac{Lrb}{Vext} + \frac{L_D}{V_{Dbi+1}} \quad where\ i = 1, ....(n-1) \\[2ex] V_{Dbn-1} = \frac{L_D}{L_{rb}}V_{ext} \end{cases}$$

Where:

Vext is the extrusion speed, corresponding to the infeed speed of the pipe at the conveyor 3, that is, to the extrusion speed of the machine 11 for extruding the pipes P;
Lrb is the length of the pipes of minimum length (short pipes);
Lra is the length of the pipe of maximum length (long pipe);
Vc is the conveying speed Vc of the pipes P on the transport unit 8 of the pipes P, that is, in the feed channel 7;
Ld is the length of the path 4 of the conveyor, acting by conveying the pipes P;
Vda is the speed of the conveyor 3 for the pipe of maximum length;
Vdb1 is the speed of the conveyor 3 for the first pipe of minimum length;
Vdbn is the speed of the conveyor 3 for the last pipe of minimum length;
N is the n-th pipe of minimum length;

Vdbi is the speed of the conveyor 3 for the i-th pipe of minimum length;

$\Delta S = Vc \times tp$ where tp is the cycle time for picking up the pipes P by the belling machine 2.

According to another aspect, the step of adjusting the speed of the conveyor 3 on the basis of the signal of the sensor 5, representing the presence of a pipe in the predetermined zone, and the type of pipe of the sequence, if the sequence of pipes P is composed, in the order of arrival, of a predetermined number $n \geq 2$ of pipes of minimum length Lrb and a pipe of maximum length Lra, comprises a step of determining the speeds of each pipe of the sequence on the basis of the solution of the previous system (K) of linear equations.

On the other hand, the following relation (K.1) expresses the detachment relation of the first short pipe (P1, PC) of the sequence S from the long pipe PL of the previous sequence S.

$$(K.1) \qquad \left(\Delta S + \frac{Lrb}{2} + \frac{Lra}{2}\right)\frac{1}{Vc} + \frac{L_D}{V_{Da}} = \left(\frac{Lrb}{2} + \frac{Lra}{2}\right)\frac{1}{Vext} + \frac{L_D}{V_{Db1}}$$

The following relation (K.2) expresses the detachment relation between the last short pipe PC of the sequence S and the long pipe PL of the same sequence S.

$$(K.2) \qquad \left(\Delta S + \frac{Lrb}{2} + \frac{Lra}{2}\right)\frac{1}{Vc} + \frac{L_D}{V_{Dbn}} = \left(\frac{Lrb}{2} + \frac{Lra}{2}\right)\frac{1}{Vext} + \frac{L_D}{V_{Da}}$$

The following relation (K.3) expresses the detachment relation between the i-th short pipe PC of the sequence S and the i+1 th short pipe PC of the same sequence S.

$$(K.3) \quad \left(\Delta S + Lrb\right)\frac{1}{Vc} + \frac{L_D}{V_{Dbi}} = \frac{Lrb}{Vext} + \frac{L_D}{V_{Dbi+1}} \quad where\ i = 1, \dots (n-1)$$

- The following relation (K.4) expresses the pulling condition of one pipe P at a time - corresponding to the optimum pulling condition - between the last short pipe PC of the sequence S coming from the outlet channel 15 of the cutter machine 12 at speed Vext and the penultimate short pipe PC of the sequence S pulled at speed Vdbn-1.

$$(K.4) \quad V_{Dbn-1} = \frac{L_D}{L_{rb}}V_{ext}$$

Resolving the system (K) limited to the equations (K.1), (K.2) and (K.3) provides a value of the extrusion speed Vext corresponding to the maximum extrusion speed which can be achieved so that $\Delta W = \Delta S$, that is to say, the maximum theoretical sustainable extrusion speed for allowing the belling machine 2 to pick up all the pipes P of the succession S of pipes being extruded.

In practice, this condition ($\Delta W = \Delta S$ with maximum extrusion speed) is the most interesting and advantageous, because it is the most profitable, for maximising the economic yield of the pipe production process.

In effect, it is this condition which allows the production capacity of belled pipes PC of short length with high extrusion speed to be increased.

The extrusion speed Vext determined in this way correlates to the parameters: Vc, $\Delta S$, Lra and Lrb.

So Vext = Vext (Vc, $\Delta S$, Lra, Lrb).

In particular, for example,

for n=2, the following are obtained:

$$(q4) \quad Vext = Vc\ \frac{Lra + 2Lrb}{2\left(\Delta S + \frac{Lra}{2} + \frac{Lrb}{2}\right) + (\Delta S + Lrb)}$$

and for n=3:

$$(q5) \qquad Vext = Vc \ \frac{\frac{Lra}{2} + \frac{3Lrb}{2}}{\left(\Delta S + \frac{Lra}{2} + \frac{Lrb}{2}\right) + (\Delta S + Lrb)}$$

Once the Vext has been determined, the optimum speeds Vd of the conveyor 3 of the apparatus 1 for each pipe P of the sequence S still remain undetermined, but they can be determined by also considering the condition (K.4).

For this reason, the control unit 6 can determine said speeds Vd for each pipe P.

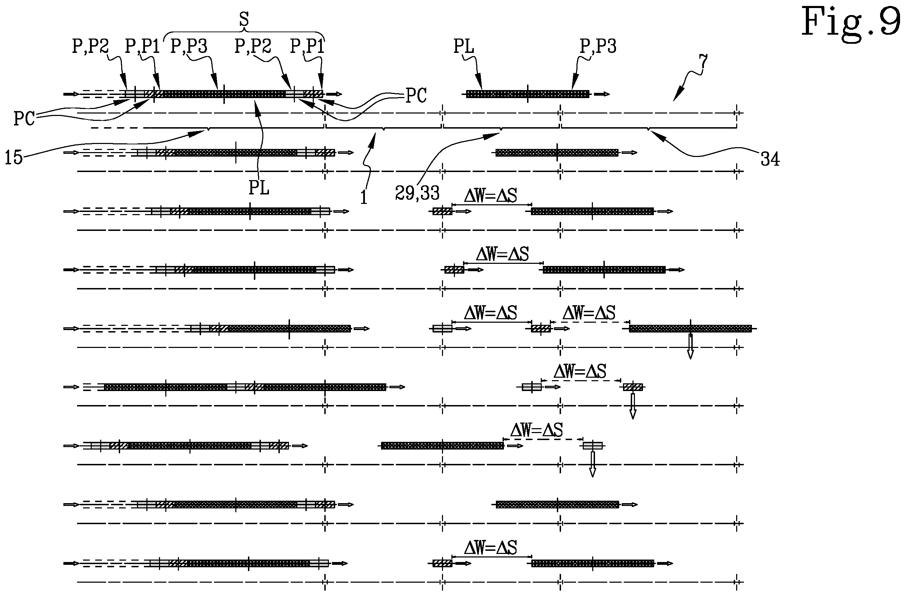

According to another aspect, for a sequence consisting, in the arrival order, of two pipes of minimum length (Lrb) and a pipe of maximum length (Lra), as illustrated in Figure 9, there is a step of determining a maximum extrusion speed Vext, corresponding to the infeed speed of the pipe at the path 4 of the conveyor 3, according to the relation q4.

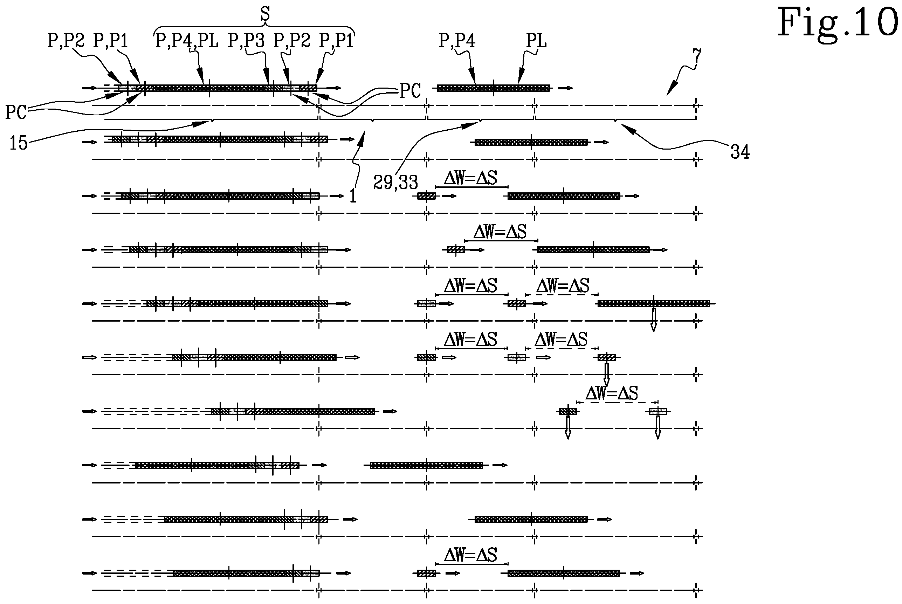

On the other hand, for a composite sequence, in the order of arrival, of three pipes of minimum length (Lrb) and a pipe of maximum length (Lra), as illustrated in Figure 10, there is a step of determining an optimum extrusion speed, according to the relation q5.

By resolving the system (K), complete with all the equations, the detachment speeds (that is, the speeds of the conveyor 3) Vdbi are determined with i=1...n and Vda.

The solution Vdbi with i=1...n and Vda allows the apparatus to pick up one pipe at a time to be guaranteed in the operational limit condition, and corresponds to spacings between the pipes in the feed channel of the belling machine $\Delta W = \Delta S$.

The algorithm (K), developed with the above-mentioned conditions, is consistent with the necessary condition for making in the feed channel 7 detachments between the pipes $\Delta W \geq \Delta S$, that is to say:

$$Vdrb1 > Vda \text{ and } Vdrbi > Vdrbi+1 \text{ with } i=1...(n-1).$$

It should therefore be noted that amongst all the detachment speeds Vd of the speed cycle of the apparatus 1, the one relative to the first short pipe of the sequence is the highest.

The solution of the system (K), in terms of theoretical speeds Vext, Vdbi with i=1...n and Vda, provides a significant reference for selecting the extrusion speed Vext of the production plant 100 and the pulling speeds Vd of the conveyor 3 only if the Vext which is obtained as the solution of the system (K) is sustainable by the production plant (that is, compatible with the extrusion machine 11 and the cutting machine 12) and only if the pulling speeds, Vdbi with i=1....n and Vda, do not exceed the maximum pulling speed which the apparatus 1 is able to achieve.

Consequently, given Vext_max as the maximum sustainable extrusion speed from the extrusion line and given Vd_max as the maximum sustainable speed by the apparatus 1, it is necessary to compare the limit values Vext_max and Vd_max with the theoretical values Vext and Vdb1 determined as solution of the system (K) and to consider different cases as described below.

Case (a)

**If** Vdb1 < Vd_max and Vext < Vext_max, the values of the various theoretical pulling speeds Vd are a significant reference but, in order to operate with a margin of safety of functionality, it is preferable to consider a value Vdb1 greater than the value determined with the system (K) of linear equations, conveniently also Vdb1 = Vd_max, so recalculating the other speeds Vdbi with i=2.....n and Vda by means of the equations (K.1) and (K.3) where Vdb1 is assumed as a known parameter.

Case (b)

**If** Vdb1 > Vd_max, the values of these theoretical drive speeds Vd are not significant. Consequently, a value of Vdb1 ≤ Vd_max is assumed as the known parameter and values of Vext, Vdbi are determined with i=2....n and Vda by the resolution of the system formed by the equations (K.1), (K.3) and (K.4).

Case (c)

**If** Vdb1 < Vd_max, and Vext > Vext_max, the extrusion speed determined by the solution of the system (K) is not sustainable by the extrusion machine 11, that is to say, more in general, by the production plant 100.

Consequently, the values of Vda and Vdbi with i=1....n are recalculated as a solution of the system formed by the equations (K.1), (K.3) and (K.4) imposing as known the parameter Vext = Vext_max. The theoretical values of these pulling speeds are a significant reference for selecting practical operational values even if the operational extrusion speed will, necessarily, be less than the optimum theoretical speed determined by the resolution of the system of equations (K).

In order to operate with a certain safety margin, it is preferable to consider a value Vdb1 greater than the predetermined value (that is, add to Vdb1 a predetermined numerical value), conveniently assuming Vdb1= Vd_max, then further calculating the other speeds Vdbi with i=2....n and Vda by means of the equations (K.1) and (K.3) where Vdb1 is assumed as a known parameter.

The speed cycle Vdb1,..., Vdbn, Vda and the corresponding extrusion speed Vext identified experimentally, or calculated using the algorithms mentioned above, are an effective reference for setting the actual operating parameters Vd in the control unit 6 and the actual extrusion speed of the production plant 100 even when predetermined deceleration ramps are used, on the conveyor 3, to stabilise the movement of the pipe in the transient step of passage of the pipe from the pulling speed Vd to the lowest pulling speed Vc of the feed channel 7 of the belling machine 2 (that is to say, during transfer of the pipe from the conveyor 3 to the feed channel 7).

It should be noted that the operating values are preferably obtained starting from the reference values by applying suitable correction coefficients to them.

The apparatus 1 and the particular method of use, that is, the method described above, in the performance of certain production programmes, as well as increasing the production capacity which can be achieved by the extrusion plant, allows a greater possibility of achieving optimum operational conditions at a constant extrusion speed.

This is very advantageous for the economic yield of the production plant.

In effect, the variation of the extrusion speed during the production in line imposes transition steps, with variable extrusion speed, which are penalising for the duration of completion of the production programme and complex to control in order to keep acceptable the dimensional characteristics of the pipe in terms of diameter and wall thickness of the pipe.

The description can be easily verified and understood with practical examples which compare production programs of short pipes in an extrusion line with and without the apparatus 1.

Example 1: n=2; relative to case (c).

In order to better understand the advantageous features, the production of the pipes will be compared according to the known method with that which can be obtained using the apparatus 1.

As will clearly be evident, the production times using the apparatus 1 will be considerably reduced compared with those of the prior art, all to the benefit of the economic yield of the plant 100.

Firstly, a plant 100 is considered for extrusion of the drain pipes P already shown as an example in the prior art description.

The production programme involves the production of DN50 pipes with 1000 long LN2000 pipes and twice the number, therefore 2000, of long LN250 pipes. In the production of this DN50 format of pipe the extrusion plant can reach a maximum sustainable extrusion speed equal to Vext_max= 12m/min.

Without the apparatus 1 it is possible to assess a management of the plant which produces a single length, that is to say, a single length of pipe at a time.

As already described, in the production of the single length LN250, so that the belling machine is able to pick up the short pipes PC, an extrusion speed of Vext =5.75m/min is sustainable.

With this extrusion speed and with the real length of the short pipe PC equal to Lrb =0.32m, 5.75x60/0.32 = 1078 LN250 pipes are produced in one hour.

So it takes 1.86 hours to produce 2,000 LN250 pipes.

The production of the long pipe LN2000 can occur at the maximum sustainable extrusion speed, therefore equal to Vext=12 m/min. With this speed and with the real length of the long pipe equal to Lra =2.07m, 12x60/2.07 = 348 LN2000 pipes are produced in one hour.

So it takes 2.88 hours to produce 1000 LN2000 pipes.

Overall, with this single length production mode, according to prior art, it takes 1.86+2.88 = 4.74 hours to complete the production program.

Advantageously, it is possible to produce the long pipes LN2000 with alternating mode to the short pipes LN250 at the maximum speed of 12m/min until the 1000 long pipes LN2000 are finished and produce the missing 1000 short pipes LN250 in single length mode at a speed of 5.75 m/min.

The length of the Lra+Lrb sequence (LN2000 long pipes and LN250 short pipes) is 2.07m+0.32m=2.39m.

It should be noted that in a single hour at Vext = 12m/min, 12x60/2.39 = 301 LN2000 pipes can be made and 301 LN250 pipes.

It therefore takes 3.32 hours to produce 1000 LN2000 pipes. The remaining 1000 LN250 pipes are produced in a single length mode at 5.75m/min, therefore in a time of 0.93 hours.

Overall, with the production mode firstly with alternating lengths and then in a single short length, 3.32+0.93= 4.25 hours are required to complete the production program.

Moreover, it must also be considered that the variation of the extrusion speed during production in line requires transition steps in which the productivity of the line is not optimised.

More specifically, with reference to the example cases, in order to manage the transient, it is preferable to firstly produce the short pipes PC at the lowest extrusion speed; therefore activating the program for production of the long pipes, or long pipes alternated with the short ones, progressively increasing the extrusion speed up to the highest optimum value for the long length.

Consequently, due to this transient, the real time necessary to complete the production program according to the prior art is longer than the theoretical time as determined in the examples.

In order to change from a steady state extrusion speed of 5.75 m/min to a steady state speed of 12 m/min, an increase in the duration of corresponding production programs equal to 1 hour may be assumed.

It is therefore conceivable that, according to prior art, approximately 5.25 hours may be taken to produce the sequence of long LN2000 and short LN250 pipes assigned.

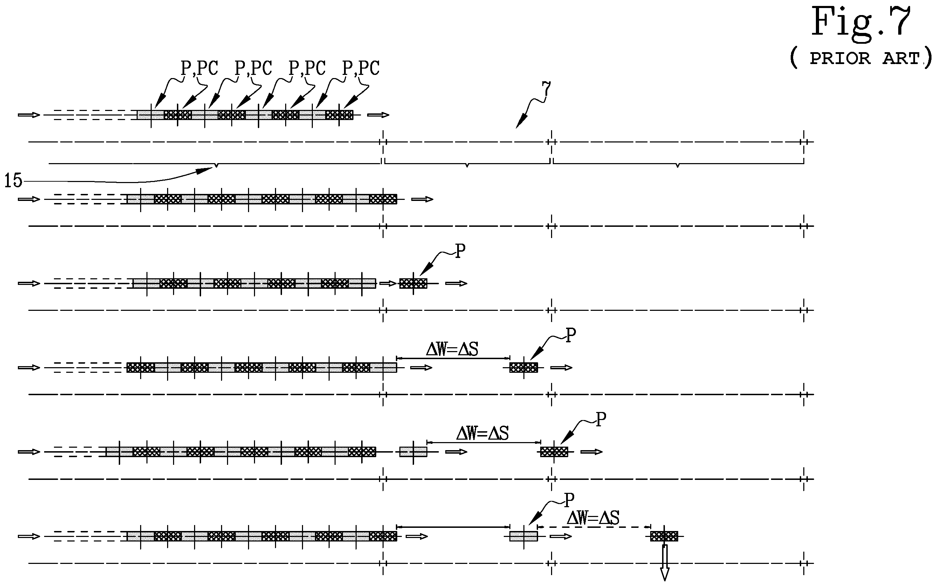

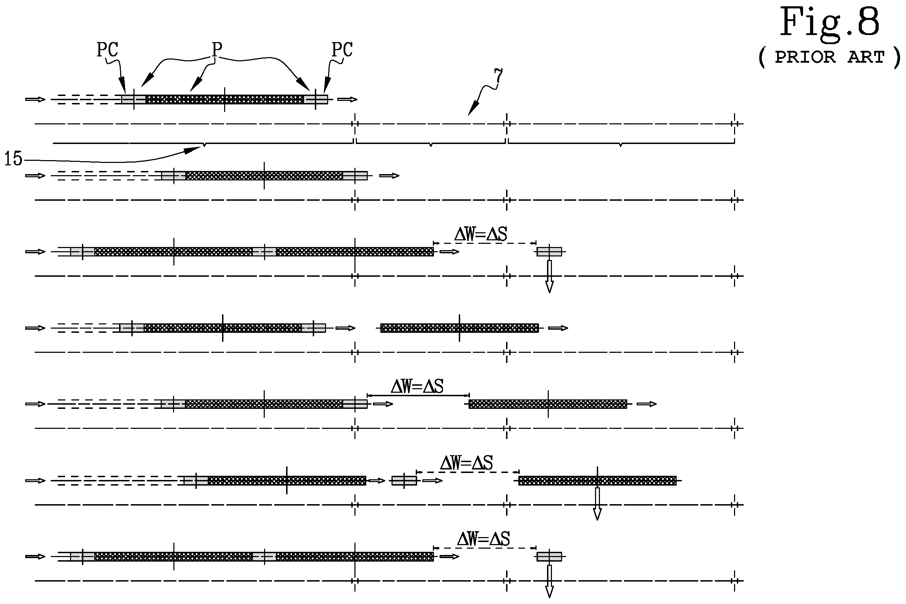

The diagrams shown in Figures 7 and 8 show the process for distribution of the pipes from the outlet channel 15 of the cutting machine 12 to the feed channel 7 of the belling machine 2, in the absence of the apparatus 1 (that is to say, according to the prior art).

The diagram of Figure 7 refers to the production of pipes of equal and short length with Lr=0.32m.

The diagram of Figure 8 refers to the production of pipes of two different lengths Lra and Lrb in alternating sequence with Lra=2.07m and Lrb=0.32m.

The diagrams shown in Figures 7 and 8 show that the spacing between the pipes which is achieved in the detachment channel 29 of the belling machine 2 is equal for all the pipes P, and equal to the value $\Delta S$.

On the other hand, the extrusion plant 100 is considered comprising the apparatus 1.

With reference to the heights of the longitudinal axes of the pipes moving in the various sections of the plant 100, when the pipes are conveyed, the following should be noted:

- in the outlet channel 15 from the cutting machine 12 the height of the axis 31 of the pipe P is labelled Hext (Hext =1050mm),
- in the apparatus 1 the height of the axis 30 of the pipe P is labelled Hd;
- in the feed channel 7 of the belling machine 2 the height of the axis 32 of the pipe P is defined with Hc.

With reference purely by way of an example to the example illustrated, the apparatus 1 is positioned vertically at a height such that Hd=1025mm, whilst the feed channel 7 of the belling machine is adjusted in height in such a way that Hc=1000mm.

For this reason, the apparatus 1 complies with the condition Hc < Hd < Hext.

The conveyor 3 is characterised by a length Ld=2.0m.

This length Ld of the conveyor 3 complies with the conditions associated with the lengths of pipe P which the apparatus 1 and the plant 100 must make, as well as the minimum separation distance which must exist between two pipes in the feed channel 7 of the belling machine 12 so that both are picked up (in the cycle time) by the belling machine 12, that is to say:

$$Ld > \Delta S + Lrmin; \quad Ld > Lrmax/2; \quad Ld < Lrmax.$$

In effect, in the plant considered as an example, there are the following values for the parameters which condition Ld:

$$\Delta S=1.35m; \qquad Lrmin=0.22m; \qquad Lrmax=3.07m$$

The performance limit of the apparatus 1 of maximum sustainable transfer speed equal to Vd_max = 100 m/min is known.

Summing up, the known coefficients of the equations of the system (3) are:

$$Ld=2.0m$$

$$\Delta S=1.35m$$

$$Lra=2.07m$$

$$Lrb=0.32m$$

$$Vc=30m/min$$

A method of production is considered of successions of pipes P in sequences S each consisting of n=2 short pipes Lrb=0.32m and 1 long pipe Lra=2.07m.

Solving the system (K) will determine:

$$Vext =12.03 \text{ m/min}$$

(can be determined by directly applying formula (4))

$$Vdb1 = 75.2 \text{ m/min}$$

$$Vdb2 = 35.93 \text{ m/min}$$

$$Vda = 48.66 \text{ m/min}$$

If Vext > Vext_max, the conditions defined in case (c) are applicable.

Consequently, the speeds Vd of the apparatus 1 are recalculated in the manner described below.

Vext =12m/min is set in (K.4) to calculate:

$$V_{Db1} = \frac{L_D}{L_{rb}}Vext$$

With the equation (K.3) the following is calculated $V_{Db2} = \frac{L_D}{(\Delta S + Lrb)\frac{1}{V_c}}$

Vda is calculated with the equation (K.1), that is:

$$Vda = \frac{LD}{\left(\frac{Lra}{2}+\frac{Lrb}{2}\right)\frac{1}{Vext}+\frac{LD}{V_{Db1}}-\left(\Delta S+\frac{Lrb}{2}+\frac{Lra}{2}\right)\frac{1}{V_C}}$$

$$Vext =12 \text{ m/min}$$

$$Vdb1 = 75 \text{ m/min}$$

$$Vdb2 = 35.93 \text{ m/min}$$

$$Vda = 48.3 \text{ m/min}$$

In order to operate at Vext =12 m/min with operational safety margin of pulling one pipe at a time, Vdb1= Vd_max=100 m/min is assumed, Equation (3.3) calculates the following

$$V_{Db2} = \frac{L_D}{\frac{L_D}{V_{db1}}+(\Delta S+Lrb)\frac{1}{V_c}-\frac{L_{rb}}{V_{ext}}}$$

Equation (K.1) calculates the following

$$Vda = \frac{LD}{\left(\frac{Lra}{2}+\frac{Lrb}{2}\right)\frac{1}{Vext}+\frac{LD}{V_{Db1}}-\left(\Delta S+\frac{Lrb}{2}+\frac{Lra}{2}\right)\frac{1}{V_C}}$$

In conclusion, with the new calculated values of Vdb2 and Vda, in the presence of an apparatus 1 the following operating condition can be achieved:

$$Vext = 12 \text{ m/min}$$

$$Vdb1 = 100 \text{ m/min}$$

$$Vdb2 = 40.82 \text{ m/min}$$

$$Vda = 57.55 \text{ m/min}$$

Therefore, the Vext =12 m/min is sustainable also in the presence of the apparatus 1 and, conveniently, a continuous working mode can be achieved at a constant extrusion speed with succession of pipes in sequences consisting of 2 short pipes Lrb=0.32m and 1 long pipe Lra=2.07m.

The length of the sequence is 0.32+0.32+2.07=2.71m.

In 1 hour at Vext=12m/min, 12x60/2.71 = 265 LN2000 pipes and 530 LN250 pipes can be made.

Consequently, it takes 3.77 hours to produce the 1000 LN2000 and 2000 LN250 pipes.

Consequently, with the continuous production mode of sequences formed by two short lengths alternated with a long length, with line equipped with apparatus 1 operating with a predetermined cycle speed Vd, it takes 3.77 hours to complete the production programme.

Obviously, this is extremely advantageous, from the point of view of productivity, compared with the prior art.

The diagram shown in Figure 9 represents the process for distributing the pipes from the outlet channel 15 of the cutting machine 12 to the feed channel 7 of the belling machine 2 by means of the apparatus 1 with the distribution speed cycle corresponding to the case considered by way of example.

It is verified that the spacing between the pipes achieved in the feed channel 7 of the belling machine 2 is equal to or greater than the value $\Delta S$, defined above.

In particular, in line with the assessment of the pulling speeds which excluded the condition (K.2), there is a detachment $\Delta W > \Delta S$ between the last short pipe PC of the sequence S and the long pipe PL of the same sequence.

Therefore, in the performance of the example production program, the presence of the apparatus 1, as well as increasing the production capacity achievable by the extrusion plant, allows the continuity of the extrusion speed to be maintained.

With reference to another example (Example 2), the case in which n=3 will be considered, relating to the case (b) previously defined.

This is illustrated in Figure 10.

The same extrusion plant and the same pipe, as well as a program for making 3000 LN250 pipes (Lrb=0.32m) and 1000 LN2000 pipes (Lra=2.07m) is considered.

Without the apparatus 1, that is to say, according to the prior art method, the most advantageous extrusion method for completing the program is that of Vext =5.75 m/min for making 2000 short pipes length LN250 followed by Vext =12 m/min for the production of alternating lengths to make 1000 LN2000 pipes and 1000 LN250 pipes.

With reference to the above example, the theoretical time needed to complete the production programme is the sum of 1.86 hours to make the 2000 LN250 pipes at Vext =5.75 m/min with 3.32 hours to simultaneously make 1000 LN2000 pipes and 1000 LN250 pipes at Vext =12m/min in production mode with alternating lengths.

Overall, according to the prior art method, without considering the set up time linked to the transient regime in the variation of the extrusion speed, it takes at least 1.86+3.32 = 5.18 hours to complete the production program. The increase in time of 1 hour determined by the presence of the transient step for varying the steady state extrusion speed from 5.75m/min to 12m/min is added to this duration.

Therefore, the duration of completion of the production programme, according to the prior art, can be estimated to be approximately 6.18 hours.

In the presence of an apparatus 1 according to the invention, in order to avoid transient conditions in the steady state extrusion speed (which would result in an increase in production times), a production method is convenient where the succession of pipes P cut in extrusion is formed by sequences S consisting of n=3 short pipes of length Lrb=0.32 m and a long pipe of length Lra=2.07 m.

Vext, Vda and Vdb1, Vdb2, Vdb3 are then calculated by resolving the system (K).

This shows that Vext =10.78m/min (which can be determined by applying the formula (q5) directly), but there is also the situation of Vdb1 > Vd_max. This is the case previously mentioned as case (b).

For this reason, a value of Vdb1= Vd_max =100m/min is assumed as the known parameter and values of Vext, Vdbi with i=2---n and Vda are determined by the resolution of the system formed by the equations (K.1), (K.3) and (K.4).

The following result is obtained.

$$Vext = 8.24 \text{ m/min}$$

$$Vdb1 = 100 \text{ m/min}$$

$$Vdb2 = 51.48 \text{ m/min}$$

$$Vdb3 = 34.67 \text{ m/min}$$

$$Vda = 24.91 \text{ m/min}$$

The length of the sequence is 0.32+0.32+0.32+2.07=3.03m.

In 1 hour at Vext = 8.24m/min 8.24x60/3.03 = 163 LN2000 pipes and 489 LN250 pipes can be made. Consequently, it takes 6.13 hours to produce the 1000 LN2000 and 3000 LN250 pipes, that is to say, to complete the production programme.

Obviously, even in these circumstances, it is advantageous to use the apparatus 1 compared with the prior art (6.13 hours with the apparatus 1 compared with 6.18 hours according to the prior art).

The diagram shown in Figure 10 shows the process for distributing the pipes from the outlet channel 15 of the cutting machine 12 to the feed channel 7 of the belling machine 2 by means of the apparatus 1 in the case considered below.

It should be noted that the spacing between the pipes achieved in the feed channel 7 of the belling machine 2 is equal to or greater than the value ΔS. In particular, in line with the assessment of the pulling speeds which excluded the condition (K.2), a detachment is evident

ΔW > ΔS between the last short pipe of the sequence and the long pipe of the same sequence.

The examples described above clearly illustrate the technical advantages of the apparatus 1 and the method claimed, in particular the increase in productivity obtained compared with the prior art solutions.

Moreover, as described in example 1 and 2, with the apparatus 1 it is not necessary to set the extrusion machine 11 to different productivity values, which avoids waiting transients and also avoids the risk of production, in the transient, of pipes of non-optimum quality since they do not conform to the required dimensional specifications.

**Claims**

1. An apparatus (1) for distributing sequences (S) of pipes made of thermoplastic material, comprising at least a first (P, P1), a second (P, P2) and a third pipe (P, P3), at least partly of different lengths, to a belling machine (2), with said apparatus (1), configured for distributing one pipe (P) at a time of the sequence (S) of pipes, and comprising:
a conveyor (3) for distributing pipes made of thermoplastic material, defining a path (4) for conveying the pipes (P);the apparatus (1) being **characterized in that** it further comprises:

   - at least one sensor (5) for detecting pipes, designed to detect the presence of pipes (P) in a predetermined zone of said conveyor (3);
   - a control and operating unit (6), connected to the sensor (5) for receiving a signal of the presence of pipes in the predetermined zone and at the distribution conveyor (3) for actuating it on the basis of the signal of the presence of pipes, the control unit (6) being configured to actuate the distribution conveyor (3), on the basis of the signal of the presence of pipes, so as to move the conveyor (3) at a different speed for different pipes (P) of each sequence (S), said speeds all being greater than the speed (Vext) of arrival, that is, of extrusion, of said pipes at the conveyor (3) and being equal for same pipes (P) of different sequences (S), that is to say, for pipes having a same order of arrival and length of different sequences (S).

2. The apparatus according to the preceding claim, comprising a feed channel (7) of the belling machine (2), positioned downstream of the distribution conveyor (3) for receiving from it the pipes (P), and wherein the conveyor (3) is configured so that a height (Hd) of the axis (31) of the pipe lying in the conveying path (4) is greater than a height (Hc) of the axis (32) of the pipe (P) lying on the feed channel (7) and less than an extrusion height (Hext) of the axis (31) of the pipe (P) upstream of the conveyor (3), that is to say, Hc < Hd < Hext.

3. The apparatus according to the preceding claim, comprising means (35) for adjusting the height of the conveyor (3), configured to allow adjustment of the height, with respect to the ground, of the axis (30) of the pipe (P) lying on the conveying path (4).

4. The apparatus according to any one of the preceding claims, wherein the conveyor (3) is sized in such a way that the length (Ld) of the conveying path (4) of the pipes of the conveyor (3) is greater than half the length (Lrmax) of the pipe (PL) of maximum length of the sequence (S) of pipes (P).

5. The apparatus according to any one of the preceding claims, wherein the conveyor (3) is sized in such a way that the length (Ld) of the conveying path (4) of the pipes (P) of the conveyor (3) is greater than the sum of the length (Lrmin) of the pipe (P) with minimum length of the sequence (S) of pipes (P) and a spacing $\Delta S$ between the pipes in the feed channel calculated as $\Delta S = Vc \times tp$, where Vc is the operating speed of the transport unit (8) of the feed channel (7) and tp is the cycle time for picking up the pipes of a belling machine (2) downstream of the apparatus (1).

6. The apparatus according to any one of the preceding claims, wherein the conveyor (3) is sized in such a way that the length (Ld) of the path (4) for moving the pipes (P) of the conveyor (3) is less than the length (Lrmax) of the pipe (PL) of maximum length of the sequence of pipes (P).

7. The apparatus according to any one of the preceding claims, wherein the control and operating unit (6) is configured for calculating the speed (Vd) of movement of the conveyor (3) at the movement path (4) of the pipes (P) on the basis of the lengths and order of arrival of the pipes (P) of the sequence of pipes.

8. The apparatus according to any one of the preceding claims, wherein the control and operating unit (6) is configured for calculating the speed (Vd) of movement of the conveyor (3) on the basis of a set extrusion speed (Vext) of the pipes (P) upstream of the conveyor (3), corresponding to the arrival speed of the pipes (P) on the conveyor (3).

9. The apparatus according to any one of the preceding claims, wherein the at least one sensor (5) comprises at least a first sensor (5A) for detecting pipes, positioned at the infeed to the movement path (4) of the pipes (P) of the distribution conveyor (3).

10. The apparatus according to any one of the preceding claims, wherein the at least one sensor (5) comprises at least a second sensor (5B) for detecting pipes, positioned at the outfeed to the movement path (4) of the pipes (P) of the distribution conveyor (3).

11. The apparatus according to claim 9 or 10, wherein the control and operating unit (6) is configured for adjusting the speed of the conveyor (3) at the movement path (4) of the pipes (P) on the basis of the signal of the first sensor (5A) and/or the second sensor (5B).

12. The apparatus according to the preceding claim and claim 10, wherein the control and operating unit (6) is configured to reduce the speed (Vd) of the conveyor (3) when the second sensor (5B) measures the presence of a pipe (P), preferably the speed being reduced on the basis of a deceleration ramp.

13. The apparatus according to any one of the preceding claims, further comprising a memory, connected to the control and operating unit (6), configured for storing length values of the pipes (P) of the sequence (S) of pipes and the order of arrival of the pipes inside each sequence (S) at the distribution conveyor (3).

14. The apparatus according to any one of the preceding claims, wherein the control and operating unit (6) is configured to drive the conveyor (3) at different speeds for different pipes (P) of each sequence (S), with said sequence (S) composed, in the order of arrival, by $n \geq 2$ pipes of equal minimum length (PC) and a pipe of maximum length (PL), as follows:

- the speed of the first pipe (P, PC, P1) of minimum length (Vdb1) of the sequence (S) is greater than the speed (Vda) of the pipe (P, PL) of maximum length of the sequence (S), that is to say,

$$Vdb1 > Vda;$$

- the speed (Vdbi) of the i-th pipe with minimum length is greater than the speed (Vdbi+1) of the i-th+1 pipe of minimum length, that is to say,

$$Vdbi > Vdbi+1 \text{ with } i=1\ldots(n-1),$$

and being the order of arrival of the pipes of minimum length to the conveyor (3).

15. A unit for belling pipes (P) made of thermoplastic material, comprising:

- the apparatus according to any of the preceding claims;
- a belling machine (2), positioned for receiving pipes from the conveyor (3) of said apparatus (1) and provided with a feed channel (7), coupled to the conveyor (3) for receiving from it the pipes.

16. The belling unit according to the preceding claim, wherein the feed channel (7) comprises a detachment channel (29), provided with a first pulling element (33) coupled with the conveyor (3) for receiving from it the pipes and a channel (37) for stopping, positioning and picking up, provided with a second pulling element (34) designed to receive the pipes from the first pulling element (33).

17. A plant (100) for making pipes made of thermoplastic material, comprising:

- a machine (12) for cutting pipes made of thermoplastic material designed to cut the extruded pipe into pieces of pipe;
- a belling unit according to claim 15 or 16.

18. The plant (100) according to the preceding claim, further comprising a machine (11) for extruding a thermoplastic pipe, operating at a predetermined extrusion speed (Vext).

19. A method for distributing pipes (P) made of thermoplastic material to a belling machine (2), comprising the following step:

- preparing a conveyor (3) for distributing pipes made of thermoplastic material, defining a path (4) for conveying the pipes (P); the method being **characterized in that** it further comprises the following steps:

 - preparing at least one sensor (5) for detecting pipes, designed to detect the presence of pipes (P) in a predetermined zone of said conveyor (3);
 - feeding to the conveyor (3) a plurality of predetermined identical sequences (S) of pipes (P), with each sequence (S) having at least three pipes, at least partly of different lengths;
 - adjusting the speed of the conveyor (3) on the basis of the signal of the sensor (5), representing the presence of a pipe in the predetermined zone, and the type and order of arrival of the pipe (P) of the sequence (S), so as to move the conveyor (3) at different speeds for different pipes (P) of each sequence (S), with said speeds all being greater than the arrival speed (Vext), that is to say, of extrusion, of said pipes at the conveyor (3) and with said speeds being equal for the same pipes (P) of different sequences (S), that is to say, for pipes having a same order of arrival and length of different sequences (S).

20. The method according to claim 19, wherein said sequence (S) comprises, in the order of arrival, of $n \geq 2$ pipes of minimum length (PC) and a pipe of maximum length (PL) and the step of adjusting the speed of the conveyor (3) comprises adjusting the speed of the conveyor (3) according to the following relations:

- the speed of the first pipe (P, PC, P1) of minimum length (Vdb1) of the sequence (S) is greater than the speed (Vda) of the pipe (P, PL) of maximum length of the sequence (S), that is to say,
-

$$Vdb1 > Vda;$$

- the speed (Vdbi) of the i-th pipe with minimum length is greater than the speed (Vdbi+1) of the i-th+1 pipe of minimum length, that is to say,

$$Vdbi > Vdbi+1 \text{ with } i=1\ldots(n-1),$$

and being the order of arrival of the pipes of minimum length to the conveyor (3).

**21.** The method according to claim 19 or 20, comprising:

- a step of preparing a feed channel (7) of the belling machine (2), positioned downstream of the distribution conveyor (3) for receiving from it the pipes,
- a step of transferring said pipes from the conveyor (3) to the feed channel (7),
- and a step of picking up a pipe from the feed channel (7) for the pipes and positioning it at a first processing station of the belling machine (2),

and wherein said speeds (Vd) of the pipes are determined in such a way as to have between the pipes (P), at the end of the conveying path (4) of the conveyor (3), a spacing (ΔW) greater than or equal of the product between the conveying speed (Vc) of the pipes on the transport unit (8) of the pipes and the cycle time (tp) for picking up the pipes of the belling machine (2), that is to say:

$$\Delta W \geq \Delta S$$

where ΔS= Vc x tp.

**22.** The method according to any one of claims 19 to 21, wherein the step of adjusting the speed of the conveyor (3) on the basis of the signal of the sensor (5) and the type and order of pipe of the sequence, short or long, if the sequence (S) of pipes is composed in the order of arrival, of a predetermined number n ≥ 2 of short pipes (PC), that is, of minimum length (Lrb), and a long pipe (PL), that is, with maximum length (Lra), comprises a step of determining the speeds (Vd) of each pipe of the sequence (S) on the conveyor (3) on the basis of the solution of the following system of linear equations:

$$\begin{cases} \left(\Delta S + \dfrac{Lrb}{2} + \dfrac{Lra}{2}\right)\dfrac{1}{Vc} + \dfrac{L_D}{V_{Da}} = \left(\dfrac{Lrb}{2} + \dfrac{Lra}{2}\right)\dfrac{1}{Vext} + \dfrac{L_D}{V_{Db1}} \\[4ex] \left(\Delta S + \dfrac{Lrb}{2} + \dfrac{Lra}{2}\right)\dfrac{1}{Vc} + \dfrac{L_D}{V_{Dbn}} = \left(\dfrac{Lrb}{2} + \dfrac{Lra}{2}\right)\dfrac{1}{Vext} + \dfrac{L_D}{V_{Da}} \\[4ex] (\Delta S + Lrb)\dfrac{1}{Vc} + \dfrac{L_D}{V_{Dbi}} = \dfrac{Lrb}{Vext} + \dfrac{L_D}{V_{Dbi+1}} \quad where\ i = 1, \ldots . (n-1) \\[4ex] V_{Dbn-1} = \dfrac{L_D}{L_{rb}} V_{ext} \end{cases}$$

Where:

Vext is the extrusion speed, corresponding to the infeed speed of the pipe at the conveyor 3, that is, to the extrusion speed of the machine 11 for extruding the pipes P;
Lrb is the length of the pipes of minimum length (short pipes);
Lra is the length of the pipe of maximum length (long pipe);
Vc is the conveying speed Vc of the pipes P on the transport unit 8 of the pipes P, that is, in the feed channel 7;
Ld is the length of the path 4 of the conveyor, acting by conveying the pipes P;
Vda is the speed of the conveyor 3 for the pipe of maximum length;
Vdb1 is the speed of the conveyor 3 for the first pipe of minimum length;
Vdbn is the speed of the conveyor 3 for the last pipe of minimum length;
N is the n-th pipe of minimum length;
Vdbi is the speed of the conveyor 3 for the i-th pipe of minimum length;
ΔS= Vc x tp where tp is the cycle time for picking up the pipes P by the belling machine 2.

23. The method according to any one of claims 19 to 22, wherein for a sequence (S) composed, in the order of arrival, of two pipes of minimum length (Lrb) and a pipe of maximum length (Lra), there is a step of determining an optimum extrusion speed (Vext), corresponding to the infeed speed of the pipe at the conveying path (4) of the conveyor (3), as follows:

$$Vext = Vc \; \frac{Lra+2Lrb}{2\left(\Delta S+\frac{Lra}{2}+\frac{Lrb}{2}\right)+(\Delta S+Lrb)}$$

or for a composite sequence, in the order of arrival, of three pipes of minimum length (Lrb) and a pipe of maximum length (Lra), there is a step of determining an optimum extrusion speed, according to the following

$$Vext = Vc \; \frac{\frac{Lra}{2}+\frac{3Lrb}{2}}{\left(\Delta S+\frac{Lra}{2}+\frac{Lrb}{2}\right)+(\Delta S+Lrb)}$$

Where:

Lrb is the length of the pipes of minimum length,
Lra is the length of the pipe of maximum length,
Vc is the conveying speed (Vc) of the pipes on the transport unit (8) of the pipes,
$\Delta S$= Vc x tp where tp is the cycle time for picking up the pipes from the feed channel (7) by the belling machine (2).

24. The method according to any one of claims 19 to 23, comprising a step of comparing the predetermined optimum extrusion speed (Vext) on the basis of the solution of the system of linear equations according to claim 22 with a maximum sustainable extrusion speed (Vext_max).

25. The method according to any one of claims 19 to 24, comprising a step of comparing the predetermined speeds (Vd) of each pipe of the sequence (S) on the conveyor (3) with a maximum conveying speed (Vd_max) of the conveyor (3).

26. The method according to claim 24 or 25, wherein the predetermined optimum extrusion speed (Vext) is less than the maximum sustainable extrusion speed (Vext_max) and the predetermined speed of the first pipe of short length (Vdb1) is less than a maximum conveying speed (Vd_max) of the conveyor (3), comprising a step of setting the speed of the first pipe of short length (Vdb1) equal to the maximum conveying speed (Vd_max) of the conveyor (3), and again performing the step of determining the speeds (Vd) of the remaining pipes of the sequence (S) on the conveyor (3) on the basis of the solution of the system of linear equations according to claim 22.

27. The method according to claim 24 or 25, wherein the predetermined speed of the first pipe of short length (Vdb1) is greater than a maximum conveying speed (Vd_max) of the conveyor (3), comprising a step of setting the speed of the first pipe of short length (Vdb1) equal to or less than the maximum conveying speed (Vd_max) of the conveyor (3), and to again perform the determination of the speeds (Vd) of the remaining pipes of the sequence (S) on the conveyor (3) on the basis of the solution of the system of linear equations according to claim 22.

28. The method according to claim 24 or 25, wherein the predetermined optimum extrusion speed (Vext) is greater than the maximum sustainable extrusion speed (Vext_max) and the predetermined speed of the first pipe of short length (Vdb1) is less than a maximum conveying speed (Vd_max) of the conveyor (3), comprising a step of setting the optimum extrusion speed (Vext) equal to the maximum sustainable extrusion speed (Vext_max) and again determining the speeds (Vd) of the remaining pipes of the sequence (S) on the conveyor (3) on the basis of the solution of the system of linear equations according to claim 22.

29. A method for making a thermoplastic pipe, comprising the steps of:

- extruding, by means of an extrusion machine (11), a pipe made of thermoplastic material at an extrusion speed (Vext) and feeding said pipe to a cutting machine (12) for dividing said extruded pipe into individual pipes having a first and a second end;

- actuating all the steps according to the method for distributing pipes made of thermoplastic material to a belling machine (2) according to any one of claims 19 to 28.

30. The method according to the preceding claim, comprising a step of setting the extrusion speed (Vext) of the extrusion machine (11) on the basis of the predetermined optimum extrusion speed (Vext).

**Patentansprüche**

1. Vorrichtung (1) zum Verteilen von Abfolgen (S) von Rohren aus thermoplastischem Material, umfassend mindestens ein erstes (P, P1), ein zweites (P, P2) und ein drittes Rohr (P, P3), die mindestens teilweise unterschiedliche Längen aufweisen, an eine Muffenmaschine (2), wobei die Vorrichtung (1) ausgelegt ist, um jeweils ein Rohr (P) der Abfolge (S) von Rohren zu verteilen, und Folgendes umfasst:
einen Förderer (3) zum Verteilen von Rohren aus thermoplastischem Material, definierend einen Weg (4) zum Fördern der Rohre (P), wobei die Vorrichtung (1) **dadurch gekennzeichnet ist, dass** sie zudem Folgendes umfasst:

- mindestens einen Sensor (5) zum Erkennen von Rohren, der ausgestaltet ist, um das Vorhandensein von Rohren (P) in einer vorbestimmten Zone des Förderers (3) zu erkennen;
- eine Steuer- und Betriebseinheit (6), die mit dem Sensor (5) verbunden ist, um ein Signal über das Vorhandensein von Rohren in der vorbestimmten Zone und am Verteilungsförderer (3) zu empfangen, um diesen auf der Grundlage des Signals über das Vorhandensein von Rohren zu betätigen, wobei die Steuereinheit (6) ausgelegt ist, um den Verteilungsförderer (3) auf der Grundlage des Signals über das Vorhandensein von Rohren zu betätigen, sodass der Förderer (3) bei unterschiedlicher Geschwindigkeit für unterschiedliche Rohre (P) einer jeden Abfolge (S) bewegt wird, wobei die Geschwindigkeiten alle größer sind als die Geschwindigkeit (Vext) der Ankunft, das heißt des Extrudierens, der Rohre am Förderer (3) und für gleiche Rohre (P) von unterschiedlichen Abfolgen (S) gleich ist, das heißt für Rohre, die die gleiche Ankunftsreihenfolge und Länge unterschiedlicher Abfolgen (S) aufweisen.

2. Vorrichtung nach dem vorhergehenden Anspruch, umfassend einen Zuführungskanal (7) der Muffenmaschine (2), der nach dem Verteilungsförderer (3) positioniert ist, um die Rohre (P) von diesem zu empfangen, und wobei der Förderer (3) so ausgelegt ist, dass eine Höhe (Hd) der Achse (31) des Rohrs, liegend im Förderweg (4), größer ist als eine Höhe (Hc) der Achse (32) des Rohrs (P), liegend auf dem Zuführungskanal (7), und kleiner ist als eine Extrusionshöhe (Hext) der Achse (31) des Rohrs (P) vor dem Förderer (3), das heißt, dass Hc < Hd < Hext gilt.

3. Vorrichtung nach dem vorhergehenden Anspruch, umfassend Mittel (35) zum Regeln der Höhe des Förderers (3), die ausgelegt sind, um die Höhenregelung der Achse (30) des Rohrs (P), liegend auf dem Förderweg (4), in Bezug auf den Boden zu ermöglichen.

4. Vorrichtung nach einem der vorhergehenden Ansprüche, wobei der Förderer (3) so bemessen ist, dass die Länge (Ld) des Förderwegs (4) der Rohre des Förderers (3) größer ist als die Hälfte der Länge (Lrmax) des Rohrs (PL) mit maximaler Länge der Abfolge (S) von Rohren (P).

5. Vorrichtung nach einem der vorhergehenden Ansprüche, wobei der Förderer (3) so bemessen ist, dass die Länge (Ld) des Förderwegs (4) der Rohre (P) des Förderers (3) größer ist als die Summe der Länge (Lrmin) des Rohrs (P) mit minimaler Länge der Abfolge (S) von Rohren (P) und eines Abstands ΔS zwischen den Rohren im Zuführungskanal, berechnet als ΔS = Vc x tp, ist, wobei Vc die Betriebsgeschwindigkeit der Transporteinheit (8) des Zuführungskanals (7) ist und tp die Zykluszeit zum Aufnehmen der Rohre einer Muffenmaschine (2) nach der Vorrichtung (1) ist.

6. Vorrichtung nach einem der vorhergehenden Ansprüche, wobei der Förderer (3) so bemessen ist, dass die Länge (Ld) des Wegs (4) zum Bewegen der Rohre (P) des Förderers (3) kleiner ist als die Länge (Lrmax) des Rohrs (PL) mit maximaler Länge der Abfolge von Rohren (P).

7. Vorrichtung nach einem der vorhergehenden Ansprüche, wobei die Steuer- und Betriebseinheit (6) ausgelegt ist, um die Bewegungsgeschwindigkeit (Vd) des Förderers (3) am Bewegungsweg (4) der Rohre (P) auf der Grundlage der Längen und der Ankunftsreihenfolge der Rohre (P) der Abfolge von Rohren zu berechnen.

8. Vorrichtung nach einem der vorhergehenden Ansprüche, wobei die Steuer- und Betriebseinheit (6) ausgelegt ist, um die Bewegungsgeschwindigkeit (Vd) des Förderers (3) auf der Grundlage einer eingestellten Extrusionsgeschwindigkeit (Vext) der Rohre (P) vor dem Förderer (3), die der Ankunftsgeschwindigkeit der Rohre (P) auf dem Förderer (3) entspricht, zu berechnen.

9. Vorrichtung nach einem der vorhergehenden Ansprüche, wobei der mindestens eine Sensor (5) mindestens einen ersten Sensor (5A) zum Erkennen von Rohren umfasst, der am Einlauf zum Bewegungsweg (4) der Rohre (P) des Verteilungsförderers (3) positioniert ist.

10. Vorrichtung nach einem der vorhergehenden Ansprüche, wobei der mindestens eine Sensor (5) mindestens einen zweiten Sensor (5B) zum Erkennen von Rohren umfasst, der am Auslauf zum Bewegungsweg (4) der Rohre (P) des Verteilungsförderers (3) positioniert ist.

11. Vorrichtung nach Anspruch 9 oder 10, wobei die Steuer- und Betriebseinheit (6) ausgelegt ist, um die Geschwindigkeit des Förderers (3) am Bewegungsweg (4) der Rohre (P) auf der Grundlage des Signals des ersten Sensors (5A) und/oder des zweiten Sensors (5B) zu regeln.

12. Vorrichtung nach dem vorhergehenden Anspruch und Anspruch 10, wobei die Steuer- und Betriebseinheit (6) ausgelegt ist, um die Geschwindigkeit (Vd) des Förderers (3) zu reduzieren, wenn der zweite Sensor (5B) das Vorhandensein eines Rohrs (P) misst, wobei die Geschwindigkeit vorzugsweise auf der Grundlage einer Verzögerungsrampe reduziert wird.

13. Vorrichtung nach einem der vorhergehenden Ansprüche, zudem umfassend einen Speicher, der mit der Steuer- und Betriebseinheit (6) verbunden und ausgelegt ist, um Längenwerte der Rohre (P) der Abfolge (S) von Rohren und die Ankunftsreihenfolge der Rohre innerhalb einer jeden Abfolge (S) am Verteilungsförderer (3) zu speichern.

14. Vorrichtung nach einem der vorhergehenden Ansprüche, wobei die Steuer- und Betriebseinheit (6) ausgelegt ist, um den Förderer (3) bei unterschiedlichen Geschwindigkeiten für unterschiedliche Rohre (P) einer jeden Abfolge (S), wobei die Abfolge (S) in der Ankunftsreihenfolge aus $n \geq 2$ Rohren mit gleicher minimaler Länge (PC) und einem Rohr mit maximaler Länge (PL) besteht, wie folgt anzutreiben:

- die Geschwindigkeit des ersten Rohrs (P, PC, P1) mit minimaler Länge (Vdb1) der Abfolge (S) ist größer als die Geschwindigkeit (Vda) des Rohrs (P, PL) mit maximaler Länge der Abfolge (S), das heißt, dass

$$Vdb1 > Vda;$$

- die Geschwindigkeit (Vdbi) des i-ten Rohrs mit minimaler Länge ist größer als die Geschwindigkeit (Vdbi + 1) des i-ten Rohrs + 1 mit minimaler Länge, das heißt, dass

$$Vdbi > Vdbi+1, \text{ wobei } i = 1 \ldots (n\text{-}1)$$

und die Ankunftsreihenfolge der Rohre mit minimaler Länge zum Förderer (3) ist.

15. Einheit zur Muffenformung an Rohren (P) aus thermoplastischem Material, umfassend:

- die Vorrichtung nach einem der vorhergehenden Ansprüche;
- eine Muffenmaschine (2), die zum Empfangen von Rohren vom Förderer (3) der Vorrichtung (1) positioniert und mit einem Zuführungskanal (7) versehen und mit dem Förderer (3) zum Empfangen der Rohre von diesem gekoppelt ist.

16. Einheit zur Muffenformung nach dem vorhergehenden Anspruch, wobei der Zuführungskanal (7) einen Ablösekanal (29) umfasst, der mit einem ersten Zugelement (33) versehen ist, das mit dem Förderer (3) gekoppelt ist, um die Rohre von diesem empfangen, und einem Kanal (37) zum Stoppen, Positionieren und Aufnehmen, versehen mit einem zweiten Zugelement (34), das ausgestaltet ist, um die Rohre vom ersten Zugelement (33) zu empfangen.

17. Anlage (100) zur Herstellung von Rohren aus thermoplastischem Material, umfassend:

- eine Maschine (12) zum Schneiden von Rohren aus thermoplastischem Material, die ausgestaltet ist, um die extrudierten Rohre in Rohrstücke zu schneiden;

- eine Einheit zur Muffenformung nach Anspruch 15 oder 16.

18. Anlage (100) nach dem vorhergehenden Anspruch, zudem umfassend eine Maschine (11) zum Extrudieren eines thermoplastischen Rohrs, die bei einer vorbestimmten Extrusionsgeschwindigkeit (Vext) arbeitet.

19. Verfahren zum Verteilen von Rohren (P) aus thermoplastischem Material an eine Muffenmaschine (2), umfassend den folgenden Schritt:

- Vorbereiten eines Förderers (3) zum Verteilen von Rohren aus thermoplastischem Material, definierend einen Weg (4) zum Fördern der Rohre (P), wobei das Verfahren **dadurch gekennzeichnet ist, dass** es zudem die folgenden Schritte umfasst:
- Vorbereiten von mindestens einem Sensor (5) zum Erkennen von Rohren, der ausgestaltet ist, um das Vorhandensein von Rohren (P) in einer vorbestimmten Zone des Förderers (3) zu erkennen;
- Beschicken des Förderers (3) mit einer Vielzahl von vorbestimmten identischen Abfolgen (S) von Rohren (P), wobei eine jede Abfolge (S) mindestens drei Rohre aufweist, die mindestens teilweise unterschiedliche Längen aufweisen;
- Regeln der Geschwindigkeit des Förderers (3) auf der Grundlage des Signals des Sensors (5), darstellend das Vorhandensein eines Rohrs in einer vorbestimmten Zone, und des Typs und der Ankunftsreihenfolge des Rohrs (P) der Abfolge (S), sodass der Förderer (3) bei unterschiedlichen Geschwindigkeiten für unterschiedliche Rohre (P) einer jeden Abfolge (S) bewegt wird, wobei diese Geschwindigkeiten alle größer sind als die Ankunftsgeschwindigkeit (Vext), das heißt die Extrusionsgeschwindigkeit, der Rohre am Förderer (3) und wobei diese Geschwindigkeiten für die gleichen Rohre (P) unterschiedlicher Abfolgen (S) gleich sind, das heißt für Rohre, die die gleiche Ankunftsreihenfolge und Länge unterschiedlicher Abfolgen (S) aufweisen.

20. Verfahren nach Anspruch 19, wobei die Abfolge (S) in der Ankunftsreihenfolge $n \geq 2$ Rohre mit minimaler Länge (PC) und ein Rohr mit maximaler Länge (PL) umfasst und der Schritt zum Regeln der Geschwindigkeit des Förderers (3) das Regeln der Geschwindigkeit des Förderers (3) nach den folgenden Relationen umfasst:

- die Geschwindigkeit des ersten Rohrs (P, PC, P1) mit minimaler Länge (Vdb1) der Abfolge (S) ist größer als die Geschwindigkeit (Vda) des Rohrs (P, PL) mit maximaler Länge der Abfolge (S), das heißt, dass

$$Vdb1 > Vda;$$

- die Geschwindigkeit (Vdbi) des i-ten Rohrs mit minimaler Länge ist größer als die Geschwindigkeit (Vdbi + 1) des i-ten Rohrs + 1 mit minimaler Länge, das heißt, dass

$$Vdbi > Vdbi{+}1,$$

wobei i = 1 ... (n-1) und die Ankunftsreihenfolge der Rohre mit minimaler Länge zum Förderer (3) ist.

21. Verfahren nach Anspruch 19 oder 20, umfassend:

- einen Schritt zum Vorbereiten eines Zuführungskanals (7) der Muffenmaschine (2), der nach dem Verteilungsförderer (3) positioniert ist, um die Rohre von diesem zu empfangen,
- einen Schritt zum Transferieren der Rohre vom Förderer (3) zum Zuführungskanal (7),
- und einen Schritt zum Aufnehmen eines Rohrs vom Zuführungskanal (7) für die Rohre und zum Positionieren dieses an einer ersten Verarbeitungsstation der Muffenmaschine (2),

und wobei diese Geschwindigkeiten (Vd) der Rohre so bestimmt sind, dass zwischen den Rohren (P) am Ende des Förderwegs (4) des Förderers (3) ein Abstand ($\Delta$W) größer oder gleich dem Produkt zwischen der Fördergeschwindigkeit (Vc) der Rohre auf der Transporteinheit (8) der Rohre und der Zykluszeit (tp) zum Aufnehmen der Rohre der Muffenmaschine (2) besteht, das heißt:

$$\Delta W \geq \Delta S$$

wobei $\Delta S = Vc \times tp$.

**22.** Verfahren nach einem der Ansprüche 19 bis 21, wobei der Schritt zum Regeln der Geschwindigkeit des Förderers (3) auf der Grundlage des Signals des Sensors (5) und des Typs und der Rohrreihenfolge der Abfolge, lang oder kurz, wenn die Abfolge (S) von Rohren in der Ankunftsreihenfolge aus einer vorbestimmten Anzahl n $\geq$ 2 von kurzen Rohren (PC), das heißt mit minimaler Länge, (Lrb) und einem langen Rohr (PL), das heißt mit maximaler Länge (Lra), besteht, einen Schritt zum Bestimmen der Geschwindigkeiten (Vd) eines jeden Rohrs der Abfolge (S) auf dem Förderer (3) auf der Grundlage der Lösung des folgenden Systems linearer Gleichungen umfasst:

$$\left(\Delta S + \frac{Lrb}{2} + \frac{Lra}{2}\right)\frac{1}{Vc} + \frac{L_D}{V_{Da}} = \left(\frac{Lrb}{2} + \frac{Lra}{2}\right)\frac{1}{Vext} + \frac{L_D}{V_{Db1}}$$

$$\left(\Delta S + \frac{Lrb}{2} + \frac{Lra}{2}\right)\frac{1}{Vc} + \frac{L_D}{V_{Dbn}} = \left(\frac{Lrb}{2} + \frac{Lra}{2}\right)\frac{1}{Vext} + \frac{L_D}{V_{Da}}$$

$$(\Delta S + Lrb)\frac{1}{Vc} + \frac{L_D}{V_{Dbi}} = \frac{Lrb}{Vext} + \frac{L_D}{V_{Dbi+1}} \quad wobei \quad i = 1, ..., (n-1)$$

$$V_{Dbn-1} = \frac{L_D}{L_{rb}} V_{ext}$$

Wobei Folgendes gilt:

Vext ist die Extrusionsgeschwindigkeit, entsprechend der Einlaufgeschwindigkeit des Rohrs am Förderer 3, das heißt der Extrusionsgeschwindigkeit der Maschine 11 zum Extrudieren der Rohre P;
Lrb ist die Länge der Rohre mit minimaler Länge (kurze Rohre);
Lra ist die Länge des Rohrs mit maximaler Länge (langes Rohr);
Vc ist die Fördergeschwindigkeit Vc der Rohre P auf der Transporteinheit 8 der Rohre P, das heißt im Zuführungskanal 7;
Ld ist die Länge des Wegs 4 des Förderers, wirkend durch die Förderung der Rohre P;
Vda ist die Geschwindigkeit des Förderers 3 für das Rohr mit maximaler Länge;
Vdb1 ist die Geschwindigkeit des Förderers 3 für das erste Rohr mit minimaler Länge;
Vdbn ist die Geschwindigkeit des Förderers 3 für das letzte Rohr mit minimaler Länge;
N ist das n-te Rohr mit minimaler Länge;
Vdbi ist die Geschwindigkeit des Förderers 3 für das i-te Rohr mit minimaler Länge;
$\Delta S$= Vc x tp, wobei tp die Zykluszeit zum Aufnehmen der Rohre P durch die Muffenmaschine 2 ist.

**23.** Verfahren nach einem der Ansprüche 19 bis 22, wobei für eine Abfolge (S), die in der Ankunftsreihenfolge aus zwei Rohren mit minimaler Länge (Lrb) und einem Rohr mit maximaler Länge (Lra) besteht, ein Schritt zum Bestimmen einer optimalen Extrusionsgeschwindigkeit (Vext), entsprechend der Einlaufgeschwindigkeit des Rohrs am Förderweg (4) des Förderers (3), wie folgt ist:

$$Vext = Vc \ \frac{Lra + 2Lrb}{2\left(\Delta S + \frac{Lra}{2} + \frac{Lrb}{2}\right) + (\Delta S + Lrb)}$$

oder für eine zusammengesetzte Abfolge in der Ankunftsreihenfolge von drei Rohren mit minimaler Länge (Lrb) und einem Rohr mit maximaler Länge (Lra) ein Schritt zum Bestimmen einer optimalen Extrusionsgeschwindigkeit nach Folgendem stattfindet:

$$Vext = Vc \ \frac{\frac{Lra}{2} + \frac{3Lrb}{2}}{\left(\Delta S + \frac{Lra}{2} + \frac{Lrb}{2}\right) + (\Delta S + Lrb)}$$

Wobei Folgendes gilt:

Lrb ist die Länge der Rohre mit minimaler Länge,
Lra ist die Länge des Rohrs mit maximaler Länge,
Vc ist die Fördergeschwindigkeit (Ve) der Rohre auf der Transporteinheit (8) der Rohre,
$\Delta S$= Vc x tp, wobei tp die Zykluszeit zum Aufnehmen der Rohre vom Zuführungskanal (7) durch die Muffenmaschine (2) ist.

24. Verfahren nach einem der Ansprüche 19 bis 23, umfassend einen Schritt zum Vergleichen der vorbestimmten optimalen Extrusionsgeschwindigkeit (Vext) auf der Grundlage der Lösung des Systems linearer Gleichungen nach Anspruch 22 mit einer maximalen vertretbaren Extrusionsgeschwindigkeit (Vext_max).

25. Verfahren nach einem der Ansprüche 19 bis 24, umfassend einen Schritt zum Vergleichen der vorbestimmten Geschwindigkeiten (Vd) eines jeden Rohrs der Abfolge (S) auf dem Förderer (3) mit einer maximalen Fördergeschwindigkeit (Vd_max) des Förderers (3).

26. Verfahren nach Anspruch 24 oder 25, wobei die vorbestimmte optimale Extrusionsgeschwindigkeit (Vext) kleiner ist als die maximale vertretbare Extrusionsgeschwindigkeit (Vext_max) und die vorbestimmte Geschwindigkeit des ersten Rohrs mit kurzer Länge (Vdb1) kleiner ist als eine maximale Fördergeschwindigkeit (Vd_max) des Förderers (3), umfassend einen Schritt zum Einstellen der Geschwindigkeit des ersten Rohrs mit kurzer Länge (Vdb1) gleich der maximalen Fördergeschwindigkeit (Vd_max) des Förderers (3), und zum erneuten Durchführen des Schritts zum Bestimmen der Geschwindigkeiten (Vd) der restlichen Rohre der Abfolge (S) auf dem Förderer (3) auf der Grundlage der Lösung des Systems linearer Gleichungen nach Anspruch 22.

27. Verfahren nach Anspruch 24 oder 25, wobei die vorbestimmte Geschwindigkeit des ersten Rohrs mit kurzer Länge (Vdb1) größer ist als eine maximale Fördergeschwindigkeit (Vd_max) des Förderers (3), umfassend einen Schritt zum Einstellen der Geschwindigkeit des ersten Rohrs mit kurzer Länge (Vdb1) kleiner oder gleich der maximalen Fördergeschwindigkeit (Vd_max) des Förderers (3), und um erneut die Bestimmung der Geschwindigkeiten (Vd) der restlichen Rohre der Abfolge (S) auf dem Förderer (3) auf der Grundlage der Lösung des Systems linearer Gleichungen nach Anspruch 22 durchzuführen.

28. Verfahren nach Anspruch 24 oder 25, wobei die vorbestimmte optimale Extrusionsgeschwindigkeit (Vext) größer ist als die maximale vertretbare Extrusionsgeschwindigkeit (Vext_max) und die vorbestimmte Geschwindigkeit des ersten Rohrs mit kurzer Länge (Vdb1) kleiner ist als eine maximale Fördergeschwindigkeit (Vd_max) des Förderers (3), umfassend einen Schritt zum Einstellen der optimalen Extrusionsgeschwindigkeit (Vext) gleich der maximalen vertretbaren Extrusionsgeschwindigkeit (Vext_max) und zum erneuten Bestimmen der Geschwindigkeiten (Vd) der restlichen Rohre der Abfolge (S) auf dem Förderer (3) auf der Grundlage der Lösung des Systems linearer Gleichungen nach Anspruch 22.

29. Verfahren zur Herstellung eines thermoplastischen Rohrs, umfassend die folgenden Schritte:

- Extrudieren eines Rohrs aus thermoplastischem Material durch eine Extrusionsmaschine (11) bei einer Extrusionsgeschwindigkeit (Vext) und Zuführen des Rohrs zu einer Schneidmaschine (12), um das extrudierte Rohr in einzelne Rohre, aufweisend ein erstes und ein zweites Ende, zu teilen;
- Durchführen aller Schritte nach dem Verfahren zum Verteilen von Rohren aus thermoplastischem Material an eine Muffenmaschine (2) nach einem der Ansprüche 19 bis 28.

30. Verfahren nach dem vorhergehenden Anspruch, umfassend einen Schritt zum Einstellen der Extrusionsgeschwindigkeit (Vext) der Extrusionsmaschine (11) auf der Grundlage der vorbestimmten optimalen Extrusionsgeschwindigkeit (Vext).

**Revendications**

1. Dispositif (1) pour la distribution des séquences (S) de tuyaux en matière thermoplastique, comprenant au moins un premier (P, P1), un deuxième (P, P2) et un troisième tuyau (P, P3), au moins partiellement de longueurs différentes, vers une machine à cloche (2), avec ledit dispositif (1), configuré pour la distribution d'un tuyau (P) à la fois de la séquence (S) de tuyaux, et comprenant :
un convoyeur (3) pour la distribution de tuyaux en matière thermoplastique, définissant un trajet (4) pour transporter les tuyaux (P) ; le dispositif (1) étant **caractérisé en ce qu'**il comprend en outre :

   - au moins un capteur (5) pour détecter des tuyaux, conçu pour détecter la présence de tuyaux (P) dans une zone prédéterminée dudit convoyeur (3) ;
   - une unité de commande et de fonctionnement (6), reliée au capteur (5) pour recevoir un signal de présence de tuyaux dans la zone prédéterminée et au niveau du convoyeur de distribution (3) pour l'actionner sur la base du signal de présence de tuyaux, l'unité de commande (6) étant configurée pour actionner le convoyeur de distribution (3), sur la base du signal de présence de tuyaux, de manière à déplacer le convoyeur (3) à une vitesse différente pour différents tuyaux (P) de chaque séquence (S), lesdites vitesses étant toutes supérieures à la vitesse (Vext) d'arrivée, c'est-à-dire d'extrusion, desdits tuyaux au niveau du convoyeur (3) et étant égales pour des mêmes tuyaux (P) de séquences (S) différentes, c'est-à-dire pour des tuyaux ayant un même ordre d'arrivée et une même longueur de séquences (S) différentes.

2. Dispositif selon la revendication précédente, comprenant un canal d'alimentation (7) de la machine à cloche (2), positionné en aval du convoyeur de distribution (3) pour recevoir de celui-ci les tuyaux (P), et dans lequel le convoyeur (3) est configuré de telle sorte qu'une hauteur (Hd) de l'axe (31) du tuyau se trouvant sur le trajet de transport (4) est supérieure à une hauteur (Hc) de l'axe (32) du tuyau (P) se trouvant sur le canal d'alimentation (7) et inférieure à une hauteur d'extrusion (Hext) de l'axe (31) du tuyau (P) en amont du convoyeur (3), c'est-à-dire Hc < Hd < Hext.

3. Dispositif selon la revendication précédente, comprenant des moyens (35) pour ajuster la hauteur du convoyeur (3), configurés pour permettre l'ajustement de la hauteur, par rapport au sol, de l'axe (30) du tuyau (P) se trouvant sur le trajet de transport (4).

4. Dispositif selon l'une quelconque des revendications précédentes, dans lequel le convoyeur (3) est dimensionné de telle sorte que la longueur (Ld) du trajet de transport (4) des tuyaux du convoyeur (3) est supérieure à la moitié de la longueur (Lrmax) du tuyau (PL) de longueur maximale de la séquence (S) de tuyaux (P).

5. Dispositif selon l'une quelconque des revendications précédentes, dans lequel le convoyeur (3) est dimensionné de telle sorte que la longueur (Ld) du trajet de transport (4) des tuyaux (P) du convoyeur (3) est supérieure à la somme de la longueur (Lrmin) du tuyau (P) avec la longueur minimale de la séquence (S) de tuyaux (P) et un espacement $\Delta S$ entre les tuyaux dans le canal d'alimentation calculé comme $\Delta S = Vc \times tp$, où Vc est la vitesse de fonctionnement de l'unité de transport (8) du canal d'alimentation (7) et tp est le temps de cycle pour ramasser les tuyaux d'une machine à cloche (2) en aval du dispositif (1).

6. Dispositif selon l'une quelconque des revendications précédentes, dans lequel le convoyeur (3) est dimensionné de telle sorte que la longueur (Ld) du trajet (4) pour déplacer les tuyaux (P) du convoyeur (3) est inférieure à la longueur (Lrmax) du tuyau (PL) de longueur maximale de la séquence de tuyaux (P).

7. Dispositif selon l'une quelconque des revendications précédentes, dans lequel l'unité de commande et de fonctionnement (6) est configurée pour calculer la vitesse (Vd) de déplacement du convoyeur (3) sur le trajet de déplacement (4) des tuyaux (P) sur la base des longueurs et de l'ordre d'arrivée des tuyaux (P) de la séquence de tuyaux.

8. Dispositif selon l'une quelconque des revendications précédentes, dans lequel l'unité de commande et de fonctionnement (6) est configurée pour calculer la vitesse (Vd) de déplacement du convoyeur (3) sur la base d'une vitesse d'extrusion définie (Vext) des tuyaux (P) en amont du convoyeur (3), correspondant à la vitesse d'arrivée des tuyaux (P) sur le convoyeur (3).

9. Dispositif selon l'une quelconque des revendications précédentes, dans lequel le au moins un capteur (5) comprend au moins un premier capteur (5A) pour détecter des tuyaux, positionné à l'entrée du trajet de déplacement (4) des tuyaux (P) du convoyeur de distribution (3).

10. Dispositif selon l'une quelconque des revendications précédentes, dans lequel le au moins un capteur (5) comprend au moins un second capteur (5B) pour détecter des tuyaux, positionné à la sortie du trajet de déplacement (4) des tuyaux (P) du convoyeur de distribution (3).

11. Dispositif selon la revendication 9 ou 10, dans lequel l'unité de commande et de fonctionnement (6) est configurée pour ajuster la vitesse du convoyeur (3) au niveau du trajet de déplacement (4) des tuyaux (P) sur la base du signal du premier capteur (5A) et/ou du second capteur (5B).

12. Dispositif selon la revendication précédente et la revendication 10, dans lequel l'unité de commande et de fonctionnement (6) est configurée pour réduire la vitesse (Vd) du convoyeur (3) lorsque le second capteur (5B) mesure la présence d'un tuyau (P), de préférence la vitesse étant réduite sur la base d'une rampe de décélération.

13. Dispositif selon l'une quelconque des revendications précédentes, comprenant en outre une mémoire, connectée à l'unité de commande et de fonctionnement (6), configurée pour stocker des valeurs de longueur des tuyaux (P) de la séquence (S) de tuyaux et l'ordre d'arrivée des tuyaux à l'intérieur de chaque séquence (S) au niveau du convoyeur de distribution (3).

14. Dispositif selon l'une quelconque des revendications précédentes, dans lequel l'unité de commande et de fonctionnement (6) est configurée pour entraîner le convoyeur (3) à des vitesses différentes pour différents tuyaux (P) de chaque séquence (S), ladite séquence (S) étant composée, dans l'ordre d'arrivée, de $n \geq 2$ tuyaux de longueur minimale (PC) égale et d'un tuyau de longueur maximale (PL), comme suit :

- la vitesse du premier tuyau (P, PC, P1) de longueur minimale (Vdb1) de la séquence (S) est supérieure à la vitesse (Vda) du tuyau (P, PL) de longueur maximale de la séquence (S), c'est-à-dire,

$$Vdb1 > Vda ;$$

- la vitesse (Vdbi) du i-ème tuyau de longueur minimale est supérieure à la vitesse (Vdbi+1) du i-ème+1 tuyau de longueur minimale, c'est-à-dire,

$$Vdbi > Vdbi+1 \text{ avec } i=1 \ldots (n-1),$$

et étant l'ordre d'arrivée des tuyaux de longueur minimale au convoyeur (3).

15. Unité pour évaser des tuyaux (P) en matière thermoplastique, comprenant :

- le dispositif selon l'une quelconque des revendications précédentes ;
- une machine à cloche (2), positionnée pour recevoir des tuyaux provenant du convoyeur (3) dudit dispositif (1) et munie d'un canal d'alimentation (7), couplée au convoyeur (3) pour recevoir à partir de celui-ci les tuyaux.

16. Unité à cloche selon la revendication précédente, dans laquelle le canal d'alimentation (7) comprend un canal de détachement (29), muni d'un premier élément de traction (33) couplé au convoyeur (3) pour recevoir de celui-ci les tuyaux et un canal (37) pour arrêter, positionner et ramasser, muni d'un second élément de traction (34) conçu pour recevoir les tuyaux du premier élément de traction (33).

17. Installation (100) de fabrication de tuyaux en matière thermoplastique, comprenant :

- une machine (12) de découpe de tuyaux en matière thermoplastique conçue pour découper le tuyau extrudé en morceaux de tuyau ;
- une unité à cloche selon la revendication 15 ou 16.

18. Installation (100) selon la revendication précédente, comprenant en outre une machine (11) pour extruder un tuyau thermoplastique, fonctionnant à une vitesse d'extrusion prédéterminée (Vext).

19. Procédé pour la distribution de tuyaux (P) en matière thermoplastique vers une machine à cloche (2), comprenant les étapes suivantes :

- préparer un convoyeur (3) pour la distribution de tuyaux en matière thermoplastique, définissant un trajet (4) pour transporter les tuyaux (P) ; le procédé étant **caractérisé en ce qu'**il comprend en outre les étapes suivantes :
- préparer au moins un capteur (5) pour détecter des tuyaux, conçu pour détecter la présence de tuyaux (P) dans une zone prédéterminée dudit convoyeur (3) ;
- alimenter le convoyeur (3) en une pluralité de séquences identiques prédéterminées (S) de tuyaux (P), chaque séquence (S) ayant au moins trois tuyaux, au moins partiellement de longueurs différentes ;
- ajuster la vitesse du convoyeur (3) sur la base du signal du capteur (5), représentant la présence d'un tuyau dans la zone prédéterminée, et du type et de l'ordre d'arrivée du tuyau (P) de la séquence (S), de manière à déplacer le convoyeur (3) à des vitesses différentes pour des tuyaux (P) différents de chaque séquence (S), lesdites vitesses étant toutes supérieures à la vitesse d'arrivée (Vext), c'est-à-dire d'extrusion, desdits tuyaux au niveau du convoyeur (3) et lesdites vitesses étant égales pour les mêmes tuyaux (P) de séquences (S) différentes, c'est-à-dire pour des tuyaux ayant un même ordre d'arrivée et une même longueur de séquences (S) différentes.

20. Procédé selon la revendication 19, dans lequel ladite séquence (S) comprend, dans l'ordre d'arrivée, $n \geq 2$ tuyaux de longueur minimale (PC) et un tuyau de longueur maximale (PL) et l'étape consistant à ajuster la vitesse du convoyeur (3) comprend ajuster la vitesse du convoyeur (3) selon les relations suivantes :

- la vitesse du premier tuyau (P, PC, P1) de longueur minimale (Vdb1) de la séquence (S) est supérieure à la vitesse (Vda) du tuyau (P, PL) de longueur maximale de la séquence (S), c'est-à-dire,

$$Vdb1 > Vda ;$$

- la vitesse (Vdbi) du i-ème tuyau de longueur minimale est supérieure à la vitesse (Vdbi+1) du i-ème+1 tuyau de longueur minimale, c'est-à-dire,

$$Vdbi > Vdbi+1 \text{ avec } i=1 \dots (n-1),$$

et étant l'ordre d'arrivée des tuyaux de longueur minimale au convoyeur (3).

21. Procédé selon la revendication 19 ou 20, comprenant :

- une étape consistant à préparer un canal d'alimentation (7) de la machine à cloche (2), positionné en aval du convoyeur de distribution (3) pour recevoir de celui-ci les tuyaux,
- une étape consistant à transférer lesdits tuyaux du convoyeur (3) au canal d'alimentation (7),
- et une étape consistant à prélever un tuyau dans le canal d'alimentation (7) des tuyaux et positionner à une première station de traitement de la machine à cloche (2),

et dans lequel lesdites vitesses (Vd) des tuyaux sont déterminées de manière à avoir entre les tuyaux (P), à la fin du trajet de transport (4) du convoyeur (3), un espacement ($\Delta$W) supérieur ou égal au produit entre la vitesse de transport (Vc) des tuyaux sur l'unité de transport (8) des tuyaux et le temps de cycle (tp) de ramassage des tuyaux de la machine à cloche (2), c'est-à-dire :

$$\Delta W \geq \Delta S$$

où $\Delta$S= Vc x tp.

22. Procédé selon l'une quelconque des revendications 19 à 21, dans lequel l'étape consistant à ajuster la vitesse du convoyeur (3) sur la base du signal du capteur (5) et du type et de l'ordre de tuyau de la séquence, courte ou longue, si la séquence (S) de tuyaux est composée dans l'ordre d'arrivée, d'un nombre prédéterminé $n \geq 2$ de tuyaux courts (PC), c'est-à-dire de longueur minimale (Lrb), et d'un tuyau long (PL), c'est-à-dire de longueur maximale (Lra), comprend une étape consistant à déterminer des vitesses (Vd) de chaque tuyau de la séquence (S) sur le convoyeur (3) sur la base de la solution du système d'équations linéaires suivant :

$$\begin{cases} \left(\Delta S + \dfrac{Lrb}{2} + \dfrac{Lra}{2}\right)\dfrac{1}{Vc} + \dfrac{L_D}{V_{Da}} = \left(\dfrac{Lrb}{2} + \dfrac{Lra}{2}\right)\dfrac{1}{Vext} + \dfrac{L_D}{V_{Db1}} \\[3em] \left(\Delta S + \dfrac{Lrb}{2} + \dfrac{Lra}{2}\right)\dfrac{1}{Vc} + \dfrac{L_D}{V_{Dbn}} = \left(\dfrac{Lrb}{2} + \dfrac{Lra}{2}\right)\dfrac{1}{Vext} + \dfrac{L_D}{V_{Da}} \\[3em] (\Delta S + Lrb)\dfrac{1}{Vc} + \dfrac{L_D}{V_{Dbi}} = \dfrac{Lrb}{Vext} + \dfrac{L_D}{V_{Dbi+1}} \quad \text{où} \quad i = 1, \dots, (n-1) \\[3em] V_{Dbn-1} = \dfrac{L_D}{L_{rb}} V_{ext} \end{cases}$$

où :

Vext est la vitesse d'extrusion, correspondant à la vitesse d'alimentation du tuyau au niveau du convoyeur 3, c'est-à-dire à la vitesse d'extrusion de la machine 11 pour extruder des tuyaux P ;
Lrb est la longueur des tuyaux de longueur minimale (tuyaux courts) ;
Lra est la longueur du tuyau de longueur maximale (tuyau long) ;
Vc est la vitesse de transport Vc des tuyaux P sur l'unité de transport 8 des tuyaux P, c'est-à-dire dans le canal d'alimentation 7 ;
Ld est la longueur du trajet 4 du convoyeur, agissant en transportant les tuyaux P ;
Vda est la vitesse du convoyeur 3 pour le tuyau de longueur maximale ;
Vdb1 est la vitesse du convoyeur 3 pour le premier tuyau de longueur minimale ;
Vdbn est la vitesse du convoyeur 3 pour le dernier tuyau de longueur minimale ;
N est le n-ième tuyau de longueur minimale ;
Vdbi est la vitesse du convoyeur 3 pour le i-ème tuyau de longueur minimale ;

$$\Delta S = Vc \times tp$$

où tp est le temps de cycle pour le ramassage des tuyaux P par la machine à cloche 2.

23. Procédé selon l'une quelconque des revendications 19 à 22, dans lequel pour une séquence (S) composée, dans l'ordre d'arrivée, de deux tuyaux de longueur minimale (Lrb) et d'un tuyau de longueur maximale (Lra), il y a une étape consistant à déterminer une vitesse d'extrusion optimale (Vext), correspondant à la vitesse d'alimentation du tuyau au niveau du trajet de transport (4) du convoyeur (3), comme suit :

$$Vext = Vc \ \frac{Lra + 2Lrb}{2\left(\Delta S + \dfrac{Lra}{2} + \dfrac{Lrb}{2}\right) + (\Delta S + Lrb)}$$

ou pour une séquence composée, dans l'ordre d'arrivée, de trois tuyaux de longueur minimale (Lrb) et d'un tuyau de longueur maximale (Lra), il y a une étape consistant à déterminer une vitesse d'extrusion optimale, selon ce qui suit.

$$Vext = Vc \ \frac{\dfrac{Lra}{2} + \dfrac{3Lrb}{2}}{\left(\Delta S + \dfrac{Lra}{2} + \dfrac{Lrb}{2}\right) + (\Delta S + Lrb)}$$

où :

Lrb est la longueur des tuyaux de longueur minimale,
Lra est la longueur du tuyau de longueur maximale,

Vc est la vitesse de transport (Ve) des tuyaux sur l'unité de transport (8) des tuyaux,

$$\Delta S = Vc \times tp$$

où tp est le temps de cycle pour le ramassage des tuyaux provenant du canal d'alimentation (7) par la machine à cloche (2).

24. Procédé selon l'une quelconque des revendications 19 à 23, comprenant une étape consistant à comparer la vitesse d'extrusion optimale prédéterminée (Vext) sur la base de la solution du système d'équations linéaires selon la revendication 22 avec une vitesse d'extrusion maximale durable (Vext_max).

25. Procédé selon l'une quelconque des revendications 19 à 24, comprenant une étape consistant à comparer les vitesses prédéterminées (Vd) de chaque tuyau de la séquence (S) sur le convoyeur (3) avec une vitesse de transport maximale (Vd_max) du convoyeur (3).

26. Procédé selon la revendication 24 ou 25, dans lequel la vitesse d'extrusion optimale prédéterminée (Vext) est inférieure à la vitesse d'extrusion maximale durable (Vext_max) et la vitesse prédéterminée du premier tuyau de longueur courte (Vdb1) est inférieure à une vitesse de transport maximale (Vd_max) du convoyeur (3), comprenant une étape consistant à régler la vitesse du premier tuyau de longueur courte (Vdb1) égale à la vitesse de transport maximale (Vd_max) du convoyeur (3), et à effectuer à nouveau l'étape consistant à déterminer les vitesses (Vd) des tuyaux restants de la séquence (S) sur le convoyeur (3) sur la base de la solution du système d'équations linéaires selon la revendication 22.

27. Procédé selon la revendication 24 ou 25, dans lequel la vitesse prédéterminée du premier tuyau de longueur courte (Vdb1) est supérieure à une vitesse de transport maximale (Vd_max) du convoyeur (3), comprenant une étape consistant à régler la vitesse du premier tuyau de longueur courte (Vdb1) égale ou inférieure à la vitesse de transport maximale (Vd_max) du convoyeur (3), et à effectuer à nouveau la détermination des vitesses (Vd) des tuyaux restants de la séquence (S) sur le convoyeur (3) sur la base de la solution du système d'équations linéaires selon la revendication 22.

28. Procédé selon la revendication 24 ou 25, dans lequel la vitesse d'extrusion optimale prédéterminée (Vext) est supérieure à la vitesse d'extrusion maximale durable (Vext_max) et la vitesse prédéterminée du premier tuyau de longueur courte (Vdb1) est inférieure à une vitesse de transport maximale (Vd_max) du convoyeur (3), comprenant une étape consistant à régler la vitesse d'extrusion optimale (Vext) égale à la vitesse d'extrusion maximale durable (Vext_max) et à déterminer à nouveau des vitesses (Vd) des tuyaux restants de la séquence (S) sur le convoyeur (3) sur la base de la solution du système d'équations linéaires selon la revendication 22.

29. Procédé de fabrication d'un tuyau thermoplastique, comprenant les étapes de :

- extruder, au moyen d'une machine d'extrusion (11), un tuyau en matière thermoplastique à une vitesse d'extrusion (Vext) et alimenter ledit tuyau vers une machine de coupe (12) pour diviser ledit tuyau extrudé en tuyaux individuels ayant une première et une seconde extrémité ;
- actionner toutes les étapes selon le procédé pour la distribution de tuyaux en matière thermoplastique à une machine à cloche (2) selon l'une quelconque des revendications 19 à 28.

30. Procédé selon la revendication précédente, comprenant une étape consistant à régler la vitesse d'extrusion (Vext) de la machine d'extrusion (11) sur la base de la vitesse d'extrusion optimale prédéterminée (Vext).

EP 4 306 296 B1

Fig.1

Fig.2

EP 4 306 296 B1

Fig.3

Fig.4

Fig.5

Fig.6A

LN

P

P

Fig.6B

P

LN    Lb

Lr

Fig.6C

EP 4 306 296 B1

Fig.7

( PRIOR ART )

Fig.8 ( PRIOR ART )

Fig.9

EP 4 306 296 B1

Fig.10

EP 4 306 296 B1

**REFERENCES CITED IN THE DESCRIPTION**

**Patent documents cited in the description**

- EP 0129515 A
- EP 3529022 A
- EP 2008749 A
- EP 0684124 A